# EUROPEAN PATENT APPLICATION

(11) **EP 4 826 545 A1**
(43) Date of publication of application: **21.10.2026**
(21) Application number: 24911099.0
(22) Date of filing: 24.12.2024
(51) Int. Cl.: G06F 11/34

(54) **TASK PROCESSING DURATION PREDICTION METHOD, APPARATUS, DEVICE AND STORAGE MEDIUM**

(30) Priority: 29.12.2023 CN 202311873115
(71) Applicant: Huawei Technologies Co., Ltd., Shenzhen, Guangdong 518129 (CN)
(72) Inventor: LIU, Lei, Xi'an, Shaanxi 710071 (CN); FENG, Jie, Xi'an, Shaanxi 710071 (CN); MU, Xuanyu, Xi'an, Shaanxi 710071 (CN); PEI, Qingqi, Xi'an, Shaanxi 710071 (CN); WANG, Enbo, Shenzhen, Guangdong 518129 (CN); LIANG, Wenliang, Shenzhen, Guangdong 518129 (CN); LIN, Hao, Shenzhen, Guangdong 518129 (CN); SHEN, Haihua, Shenzhen, Guangdong 518129 (CN)
(74) Representative: Epping - Hermann - Fischer
(86) International application number: PCT/CN2024/141759
(87) International publication number: WO 2025/140174

(57) **Abstract**

This application provides a method for predicting task processing duration, an apparatus, a device, and a storage medium. The method includes: A communication apparatus receives a task processing duration prediction request, where the prediction request carries task information; and predicts task processing duration of a compute node group by using a first model based on computational power information of the compute node group and the task information, where the compute node group includes M compute nodes, M is a positive integer, and the first model is determined based on the compute node group, to accurately predict the task processing duration when the compute node group executes different tasks.

## Description

This application claims priority to Chinese Patent Application No. 202311873115.7, filed with the China National Intellectual Property Administration on December 29, 2023 and entitled "METHOD FOR PREDICTING TASK PROCESSING DURATION, APPARATUS, DEVICE, AND STORAGE MEDIUM", which is incorporated herein by reference in its entirety.

### TECHNICAL FIELD

This application relates to the field of communication technologies, and in particular, to a method for predicting task processing duration, an apparatus, a device, and a storage medium.

### BACKGROUND

With development of artificial intelligence (artificial intelligence, AI), intelligent services are widely applied to different intelligent service scenarios, leading to a dramatic increase in diversity of intelligent services and demand for computational power. To achieve a goal of an intelligent and inclusive sixth generation mobile communication (6th generation mobile networks, 6G) technology and provide ubiquitous intelligent services for users, a 6G network needs to incorporate cloud, edge, and end compute nodes as compute resources into management, orchestration, and scheduling when implementing intelligent services.

Due to diversity of cloud, edge, and end execution environments in the 6G network, central processing unit (central processing unit, CPU) architectures and dominant frequencies of compute nodes executing tasks, and instruction sets of various accelerators have significant heterogeneous characteristics. These heterogeneous compute nodes have different computational capabilities, leading to different task processing duration for different types of tasks across different types of compute nodes. Therefore, to allocate tasks of different types to proper compute nodes for execution to implement higher performance and lower power consumption, task processing duration for executing tasks by the compute nodes needs to be predicted.

How to accurately predict task processing duration of a compute node is an urgent problem to be resolved currently.

### SUMMARY

Embodiments of this application provide a method for predicting task processing duration, an apparatus, a device, and a storage medium, to accurately predict task processing duration of a compute node in a wireless network.

According to a first aspect, an embodiment of this application provides a method for predicting task processing duration. The method may be performed by a communication apparatus. The communication apparatus may be a first apparatus below. The communication apparatus may be a communication device in a radio access network (radio access network, RAN) or a core network, or the communication apparatus may be a component in a communication device, for example, a chip, a chip system, or another functional module that can invoke a program and execute the program. For ease of understanding, the following uses an example in which the method is performed by a communication apparatus for description with examples.

For example, the method includes: A communication apparatus receives a task processing duration prediction request, where the prediction request carries first task information; and predicts task processing duration of a compute node group by using a first model based on computational power information of the compute node group and the first task information, where the compute node group includes M compute nodes, M is a positive integer, and the first model is determined based on the compute node group, to accurately predict the task processing duration when the compute node group executes different tasks.

In a possible implementation, the first task information may include at least one of a resource parameter, a task parameter, or information about input data. The resource parameter, the task parameter, and the information about the input data are all associated with the task processing duration, so that the first model accurately predicts the task processing duration. The resource parameter may indicate a resource type and a quantity of resources for performing task processing. The task parameter indicates a parameter used for task processing. The information about the input data indicates a size of the input data required for task processing.

Optionally, when task processing is performed by using a third model, the task parameter may include model structure information of the third model.

Optionally, when task processing is performed by using first code, the task parameter may include information about the first code.

In a possible implementation, compute nodes in the compute node group may be associated with each other. Because the first model corresponds to the compute node group, a higher correlation between compute nodes in the compute node group indicates higher prediction accuracy of the task processing duration. Therefore, when at least one computational power parameter is the same for the M compute nodes, the correlation between the compute nodes in the compute node group can be ensured, thereby improving prediction accuracy of the task processing duration.

In a possible implementation, the first model may be determined based on a second model in at least one first compute node, the second model is used to predict task processing duration of a corresponding first compute node, and the M compute nodes include the at least one first compute node. For example, the communication apparatus may determine, based on the second model in the at least one first compute node, the first model corresponding to the compute node group, to obtain the first model, so that the first model is subsequently used to predict the task processing duration of the compute nodes in the compute node group.

In a possible implementation, before determining the first model based on the second model, the communication apparatus may first obtain the second model. For example, the communication apparatus may send a first request, where the first request is used to request transmission of information about the second model, and receive a first response, where the first response includes the information about the second model.

Optionally, the information about the second model includes model structure information and/or model parameter information of the second model.

Optionally, the information about the second model includes a model description of the second model, and the model description of the second model indicates a type of input data of the second model and a type of output data of the second model.

In a possible implementation, in a process of obtaining the second model, the communication apparatus may receive first information from each of N compute nodes, where the first information includes information indicating whether the compute node includes the second model, the N compute nodes include the M compute nodes. In addition, the communication apparatus may determine the at least one first compute node in the M compute nodes based on the N pieces of first information, to obtain the second model in the at least one first compute node.

In a possible implementation, the communication apparatus may receive computational power information from each of the N compute nodes, where the computational power information includes at least one computational power parameter of a corresponding compute node; and determine the compute node group and the computational power information of the compute node group based on the computational power information of each of the N compute nodes. It should be understood that the computational power information of each of the N compute nodes may be further used to group the N compute nodes to obtain at least one compute node group.

In a possible implementation, in the process of obtaining the second model, the communication apparatus may receive status information from each of the N compute nodes, where the status information includes network transmission bandwidth and/or a remaining power of a corresponding compute node, and the status information is used to determine the at least one first compute node, to obtain the second model in the at least one first compute node. A manner of determining the at least one first compute node by the communication apparatus is not limited in this application. For example, the communication apparatus may determine and indicate one first compute node with reference to the first information, the computational power information, and the status information, or randomly select a first compute node. In a possible implementation, the communication apparatus expects to obtain the second model based on a compute node, on which no second model is deployed, in the M compute nodes. For example, the compute node on which no second model is deployed is more likely to perform task processing, for example, a compute node has relatively large network transmission bandwidth and/or a relatively large remaining power. Therefore, considering that the first model corresponding to the compute node group is determined based on a second model in the compute node, the task processing duration may be more accurately predicted. For another example, when no second model is deployed on the M compute nodes, the communication apparatus may request at least one of the M compute nodes to obtain the second model through model training.

For example, the communication apparatus sends a second request, where the second request carries first indication information for training the second model, and receives a second response, to obtain the second model. When the first indication information indicates that the second model is obtained through training, the second response includes the information about the second model; or when the first indication information indicates to obtain a first training dataset, the second response includes a first training dataset used for training to obtain the second model, each piece of first training data in the first training dataset includes a feature and a label, and the label is a measured value of task processing duration corresponding to the feature.

In a possible implementation, the second request further carries second indication information, and the second indication information indicates to generate the label in the first training dataset. Optionally, the second indication information may carry a type identifier of a reference test task, the type identifier of the reference test task may be used to determine the reference test task, and the reference test task is used to generate a measured value of the task processing duration based on computational power information of the first compute node and the test task information. In a possible implementation, the second request further includes the model structure information of the second model, so that the first compute node determines a required model structure of the second model, and obtains the second model through training based on the first training dataset and the model structure of the second model.

In a possible implementation, the second request further includes the model description of the second model, so that the first compute node determines the type of the input data and the type of the output data of the second model that are required, so that the second model obtained through training meets a requirement.

In a possible implementation, the communication apparatus may send a first prediction response, where the first prediction response carries information about the task processing duration corresponding to the compute node group, to transmit the task processing duration of the compute node group.

Optionally, the first prediction response may include an identifier of the compute node group and the information about the task processing duration, to determine a correspondence between the task processing duration and the compute node group.

In a possible implementation, the communication apparatus may send third indication information; and when the third indication information indicates to update the second model, receive information, sent by the first compute node, about an updated second model, and update the first model based on the information about the updated second model. The first compute node updates the second model, so that an update of the first model can reduce resource overheads of the communication apparatus.

In a possible implementation, the communication apparatus may send third indication information; and when the third indication information indicates not to update the second model, receive a measured value, sent by the first compute node, of task processing duration corresponding to the first task information, and train the first model based on the measured value of the task processing duration corresponding to the first task information to obtain an updated first model. The communication apparatus does not need to wait for the first compute node to update the second model before updating the first model, thereby reducing a processing delay.

In a possible implementation, the first request carries the third indication information.

In a possible implementation, when the first task information corresponds to a first task, the communication apparatus sends fourth indication information, where the first task includes an unexecuted task, and the fourth indication information carries a type identifier of the first task, to perform incremental learning on the unexecuted task, thereby improving prediction accuracy of the second model, and accordingly improving prediction accuracy of the first model. According to a second aspect, an embodiment of this application provides a method for predicting task resource information. The method may be performed by a communication apparatus. The communication apparatus may be a first apparatus below. The communication apparatus may be a communication device in a RAN or a core network, or the communication apparatus may be a component in a communication device, for example, a chip, a chip system, or another functional module that can invoke a program and execute the program. For ease of understanding, the following uses an example in which the method is performed by a communication apparatus for description with examples.

For example, the method includes: A communication apparatus receives a task resource information prediction request, where the prediction request carries second task information, and predicts task resource information of a compute node group by using a fourth model based on computational power information of the compute node group and the second task information, where the compute node group includes M compute nodes, M is a positive integer, and the fourth model is determined based on the compute node group. This implements accurate prediction of the task resource information when the compute node group executes different tasks.

In a possible implementation, the second task information includes at least one of expected duration, a task parameter, and information about input data. The expected duration, the task parameter, and the information about the input data are associated with the task resource information, so that the fourth model accurately predicts the task resource information. The task parameter indicates a parameter used for task processing. The information about the input data indicates a size of the input data required for task processing.

Optionally, when task processing is performed by using a third model, the task parameter may include model structure information of the third model.

Optionally, when task processing is performed by using first code, the task parameter may include information about the first code.

In a possible implementation, compute nodes in the compute node group may be associated with each other. Because the fourth model corresponds to the compute node group, a higher correlation between compute nodes in the compute node group indicates higher prediction accuracy of the task resource information. Therefore, when at least one computational power parameter is the same for the M compute nodes, the correlation between the compute nodes in the compute node group can be ensured, thereby improving prediction accuracy of the task resource information.

In a possible implementation, the fourth model may be obtained through training based on a third training dataset, a label in the third training dataset is determined by a first model in the compute node group, and the first model is used to predict task processing duration of a corresponding compute node group.

In a possible implementation, the communication apparatus may send a second prediction response, where the second prediction response carries the task resource information corresponding to the compute node group, to transmit the task resource information.

Optionally, the second prediction response includes an identifier of the compute node group and the task resource information, so as to determine a correspondence between the task resource information and the compute node group. In a possible implementation, the first model may be determined based on a second model in at least one first compute node, the second model is used to predict task processing duration of a corresponding first compute node, and the M compute nodes include the at least one first compute node.

In a possible implementation, before determining the first model based on the second model, the communication apparatus may first obtain the second model. For example, the communication apparatus may send a first request, where the first request is used to request transmission of information about the second model, and receive a first response, where the first response includes the information about the second model.

Optionally, the information about the second model includes model structure information and/or model parameter information of the second model.

Optionally, the information about the second model includes a model description of the second model, and the model description of the second model indicates a type of input data of the second model and a type of output data of the second model.

In a possible implementation, in a process of obtaining the second model, the communication apparatus may receive first information from each of N compute nodes, where the first information includes information indicating whether the compute node includes the second model, the N compute nodes include the M compute nodes. In addition, the communication apparatus may determine the at least one first compute node in the M compute nodes based on the N pieces of first information.

In a possible implementation, the communication apparatus may receive computational power information from each of the N compute nodes, where the computational power information includes at least one computational power parameter of a corresponding compute node; and determine the compute node group and the computational power information of the compute node group based on the computational power information of each of the N compute nodes.

In a possible implementation, in the process of obtaining the second model, the communication apparatus may receive status information from each of the N compute nodes, where the status information includes network transmission bandwidth and/or a remaining power of a corresponding compute node, and the status information is used to determine the at least one first compute node, to obtain the second model in the at least one first compute node.

In a possible implementation, the communication apparatus expects to obtain the second model based on a compute node, on which no second model is deployed, in the M compute nodes. For example, the compute node on which no second model is deployed is more likely to perform task processing, for example, a compute node has relatively large network transmission bandwidth and/or a relatively large remaining power. Therefore, considering that the first model corresponding to the compute node group is determined based on a second model in the compute node, the task processing duration may be more accurately predicted. For another example, when no second model is deployed on the M compute nodes, the communication apparatus may request at least one of the M compute nodes to obtain the second model through model training.

For example, the communication apparatus sends a second request, where the second request carries first indication information for training the second model, and receives a second response, to obtain the second model. When the first indication information indicates that the second model is obtained through training, the second response includes the information about the second model; or when the first indication information indicates to obtain a first training dataset, the second response includes a first training dataset used for training to obtain the second model, each piece of first training data in the first training dataset includes a feature and a label, and the label is a measured value of task processing duration corresponding to the feature.

In a possible implementation, the second request further carries second indication information, and the second indication information indicates to generate the label in the first training dataset. Optionally, the second indication information may carry a type identifier of a reference test task, the type identifier of the reference test task may be used to determine the reference test task, and the reference test task is used to generate a measured value of the task processing duration based on computational power information of the first compute node and the test task information. In a possible implementation, the second request further includes model structure information of the second model. In a possible implementation, the second request further includes the model description of the second model.

According to a third aspect, an embodiment of this application provides a communication apparatus, including: a transceiver module, configured to receive a task processing duration prediction request, where the prediction request carries first task information; and a processing module, configured to predict task processing duration of a compute node group by using a first model based on computational power information of the compute node group and the first task information, where the compute node group includes M compute nodes, M is a positive integer, and the first model is determined based on the compute node group.

In a possible implementation, the first task information includes a resource parameter, and the resource parameter indicates a resource type and a quantity of resources for performing task processing.

In a possible implementation, the first the task information includes a task parameter, the task parameter indicates a parameter used for task processing, and the task parameter is associated with the task processing duration.

In a possible implementation, the task parameter includes model structure information of a third model, and the third model is used for task processing.

In a possible implementation, the task parameter includes information about first code, and the first code is used for task processing.

In a possible implementation, the first task information includes information about input data, and the information about the input data indicates a size of the input data required for task processing.

In a possible implementation, at least one computational power parameter is the same for the M compute nodes.

In a possible implementation, the first model is determined based on a second model in at least one first compute node, the second model is used to predict task processing duration of a corresponding first compute node, and the M compute nodes include the at least one first compute node.

In a possible implementation, the transceiver module is further configured to: send a first request, where the first request is used to request transmission of information about the second model; and receive a first response, where the first response includes the information about the second model.

In a possible implementation, the transceiver module is further configured to receive first information from each of the N compute nodes, where the first information includes information indicating whether the compute node includes the second model, and the N compute nodes include the M compute nodes; and the processing module is further configured to determine the at least one first compute node in the M compute nodes based on the N pieces of first information.

In a possible implementation, the transceiver module is further configured to receive computational power information from each of the N compute nodes, where the computational power information includes at least one computational power parameter of a corresponding compute node; and the processing module is further configured to determine the compute node group and the computational power information of the compute node group based on the computational power information of each of the N compute nodes.

In a possible implementation, the transceiver module is further configured to receive status information from each of the N compute nodes, where the status information includes a network transmission bandwidth and/or a remaining power of a corresponding compute node, and the status information is used to determine the at least one first compute node.

In a possible implementation, the information about the second model includes model structure information and/or model parameter information of the second model.

In a possible implementation, the information about the second model includes a model description of the second model, and the model description of the second model indicates a type of input data of the second model and a type of output data of the second model.

In a possible implementation, the transceiver module is further configured to: send a second request, where the second request carries first indication information for training the second model; and receive a second response. When the first indication information indicates that the second model is obtained through training, the second response includes the information about the second model; or when the first indication information indicates to obtain a first training dataset, the second response includes a first training dataset used for training to obtain the second model, each piece of first training data in the first training dataset includes a feature and a label, and the label is a measured value of task processing duration corresponding to the feature.

In a possible implementation, the second request further carries second indication information, and the second indication information indicates to generate the label in the first training dataset.

In a possible implementation, the second request further includes model structure information of the second model and a model description of the second model.

In a possible implementation, the transceiver module is further configured to send a first prediction response, where the first prediction response carries information about the task processing duration corresponding to the compute node group.

In a possible implementation, the first prediction response includes an identifier of the compute node group and the information about task processing duration.

In a possible implementation, the transceiver module is further configured to: send third indication information; and when the third indication information indicates to update the second model, receive information, sent by the first compute node, about an updated second model, and update the first model based on the information about the updated second model; or when the third indication information indicates not to update the second model, receive a measured value, sent by the first compute node, of task processing duration corresponding to the first task information, and train the first model based on the measured value of the task processing duration corresponding to the first task information to obtain an updated first model. The first compute node belongs to the M compute nodes.

In a possible implementation, the first request carries the third indication information.

In a possible implementation, when the first task information corresponds to a first task, the transceiver module is further configured to send fourth indication information, where the first task includes an unexecuted task, and the fourth indication information carries a type identifier of the first task.

According to a fourth aspect, an embodiment of this application provides a communication apparatus, including: a transceiver module, configured to receive a task resource information prediction request, where the prediction request carries second task information; and a processing module, configured to predict task resource information of a compute node group by using a fourth model based on computational power information of the compute node group and the second task information, where the compute node group includes M compute nodes, M is a positive integer, and the fourth model is determined based on the compute node group.

In a possible implementation, the second task information includes expected duration, and the expected duration is associated with the task resource information.

In a possible implementation, the second task information includes a task parameter, the task parameter indicates a parameter used for task processing, and the task parameter is associated with the task resource information.

In a possible implementation, the task parameter includes model structure information of a third model, and the third model is used for task processing.

In a possible implementation, the task parameter includes information about first code, and the first code is used for task processing.

In a possible implementation, the second task information includes information about input data, and the information about the input data indicates a size of the input data required for task processing.

In a possible implementation, at least one computational power parameter is the same for the M compute nodes.

In a possible implementation, the fourth model is obtained through training based on a third training dataset, a label in the third training dataset is determined by a first model in the compute node group, and the first model is used to predict task processing duration of a corresponding compute node group.

In a possible implementation, the transceiver module is further configured to send a second prediction response, where the second prediction response carries the task resource information corresponding to the compute node group.

In a possible implementation, the second prediction response includes an identifier of the compute node group and the task resource information.

In a possible implementation, the first model is determined based on a second model in at least one first compute node, the second model is used to predict task processing duration of a corresponding first compute node, and the M compute nodes include the at least one first compute node.

In a possible implementation, the transceiver module is further configured to: send a first request, where the first request is used to request transmission of information about the second model; and receive a first response, where the first response includes the information about the second model.

In a possible implementation, the transceiver module is further configured to receive first information from each of the N compute nodes, where the first information includes information indicating whether the compute node includes the second model, and the N compute nodes include the M compute nodes; and the processing module is further configured to determine the at least one first compute node in the M compute nodes based on the N pieces of first information.

In a possible implementation, the transceiver module is further configured to receive computational power information from each of the N compute nodes, where the computational power information includes at least one computational power parameter of a corresponding compute node; and the processing module is further configured to determine the compute node group and the computational power information of the compute node group based on the computational power information of each of the N compute nodes.

In a possible implementation, the transceiver module is further configured to receive status information from each of the N compute nodes, where the status information includes a network transmission bandwidth and/or a remaining power of a corresponding compute node, and the status information is used to determine the at least one first compute node.

In a possible implementation, the information about the second model includes model structure information and/or model parameter information of the second model.

In a possible implementation, the information about the second model includes a model description of the second model, and the model description of the second model indicates a type of input data of the second model and a type of output data of the second model.

In a possible implementation, the transceiver module is further configured to: send a second request, where the second request carries first indication information for training the second model; and receive a second response. When the first indication information indicates that the second model is obtained through training, the second response includes the information about the second model; or when the first indication information indicates to obtain a first training dataset, the second response includes a first training dataset used for training to obtain the second model, each piece of first training data in the first training dataset includes a feature and a label, and the label is a measured value of task processing duration corresponding to the feature.

In a possible implementation, the second request further carries second indication information, and the second indication information indicates to generate the label in the first training dataset.

In a possible implementation, the second request further includes model structure information of the second model and a model description of the second model.

According to a fifth aspect, an embodiment of this application provides a communication apparatus, including a processor, configured to perform the method in any one of the first aspect, the second aspect, or the possible implementations by running a computer program or by using a logic circuit.

In a possible implementation, the communication apparatus further includes a memory, and the memory is configured to store the computer program.

In a possible implementation, the communication apparatus further includes a communication interface, and the communication interface is configured to input and/or output a signal.

According to a sixth aspect, an embodiment of this application provides a chip, including a processor, configured to invoke computer instructions from a memory and run the computer instructions, so that a device in which the chip is installed performs the method in any one of the first aspect, the second aspect, or the possible implementations.

According to a seventh aspect, an embodiment of this application provides a computer-readable storage medium, configured to store computer program instructions, and the computer program enables a computer to perform the method in any one of the first aspect, the second aspect, or the possible implementations.

According to an eighth aspect, an embodiment of this application provides a computer program, and the computer program enables a computer to perform the method in any one of the first aspect, the second aspect, or the possible implementations.

According to a ninth aspect, an embodiment of this application provides a computer program product, including computer program instructions. The computer program instructions enable a computer to perform the method in the first aspect, the second aspect, or the possible implementations.

For beneficial effects of the content in the second aspect to the ninth aspect and the possible implementations, refer to the beneficial effects brought by the first aspect and the possible implementations of the first aspect. Details are not described herein again.

### BRIEF DESCRIPTION OF DRAWINGS

FIG. 1 is a possible and non-limiting diagram of a system;
FIG. 2 is a diagram of an architecture of a communication system according to an embodiment of this application;
FIG. 3 is a schematic interaction flowchart of a method for predicting task processing duration according to an embodiment of this application;
FIG. 4A, FIG. 4B, and FIG. 4C are a schematic interaction flowchart of a method for predicting task processing duration according to an embodiment of this application;
FIG. 5A, FIG. 5B, and FIG. 5C are a schematic interaction flowchart of a method for predicting task processing duration according to an embodiment of this application;
FIG. 6 is a schematic interaction flowchart of a method for predicting task resource information according to an embodiment of this application;
FIG. 7A and FIG. 7B are a schematic interaction flowchart of a method for predicting task resource information according to an embodiment of this application;
FIG. 8 is a block diagram of a communication apparatus according to an embodiment of this application; and
FIG. 9 is another block diagram of a communication apparatus according to an embodiment of this application.

### DESCRIPTION OF EMBODIMENTS

The following describes technical solutions of this application with reference to accompanying drawings.

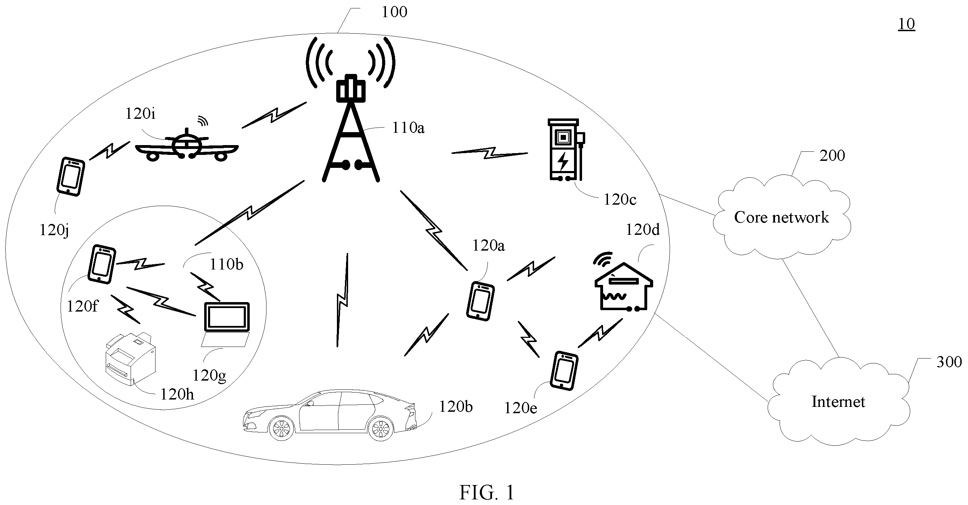

FIG. 1 is a diagram of a possible and non-limiting system. As shown in FIG. 1, a communication system 10 includes a RAN 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a cellular system related to the 3rd Generation Partnership Project (3rd generation partnership project, 3GPP), for example, a 4G, 5G, or 6G mobile communication system. The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may also be referred to as an access network device, a RAN entity, an access node, or the like sometimes, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor base station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or a part of functions of the RAN node.

In another possible scenario, the plurality of RAN nodes cooperate to assist the terminal in implementing radio access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). For example, in an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU).

The terminal may also be referred to as a terminal device, user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for users, for example, a handheld device or a vehicle-mounted device that has a wireless connection function. Currently, some examples of the terminal may be a mobile phone (mobile phone), a tablet computer (pad), a computer (for example, a notebook computer or a palmtop computer) with a wireless transceiver function, an uncrewed aerial vehicle, customer-premises equipment (customer-premises equipment, CPE), a point of sale (point of sale, POS) machine, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, a vehicle-mounted device, a wearable device, a terminal device in a 5G network, a terminal device in a system evolved after 5G, or the like.

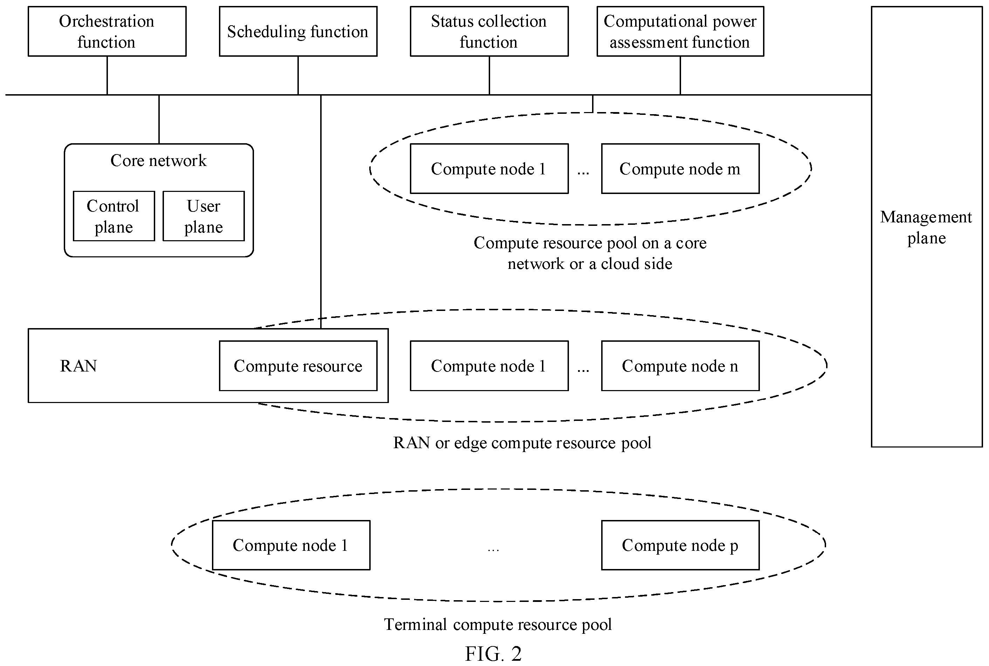

FIG. 2 is a diagram of an architecture of a communication system according to an embodiment of this application. To manage, orchestrate, and schedule intelligent services, an orchestration function, a scheduling function, a status collection function, and a computational power assessment function are deployed on a 6G network. The orchestration function, the scheduling function, the status collection function, and the computational power assessment function may be implemented by using different functional modules.

A part or all of functional modules of the orchestration function, the scheduling function, the status collection function, and the computational power assessment function may be deployed in a core network in a centralized or distributed manner, or may be deployed in a RAN in a centralized or distributed manner, or may be deployed in a core network and a RAN in a distributed manner, or may be deployed at another location. This is not limited in this application.

Optionally, any one or more of the foregoing functional modules may be deployed in an access and mobility management function (access and mobility management function, AMF), a session management function (session management function, SMF), or a network repository function (NF repository function, NRF). Alternatively, when the RAN includes a CU and a DU, any of the foregoing functions may be implemented by the CU and/or the DU. In the ORAN system, any of the foregoing functions may be implemented by an O-CU and/or an O-DU.

A part or all of functional modules of the orchestration function, the scheduling function, the status collection function, and the computational power assessment function may be deployed on a control plane or a management plane of a 6G network, or another plane newly added in the future.

Any one or more of the foregoing functional modules may manage, orchestrate, and schedule compute resource pools of cloud, edge, and end sides. The compute resource pool may include one or more compute nodes. For example, a compute resource pool on the core network or the cloud side includes a compute node 1 to a compute node m, and the compute resource pool includes but is not limited to: a compute resource pool inside the core network, or a compute resource pool of a data center such as a public cloud, a private cloud, or a hybrid cloud outside the core network. A RAN or edge compute resource pool includes a compute node 1 to a compute node n, and the compute resource pool includes but is not limited to: a compute resource pool or a computing board inside a RAN node, or a compute resource pool of multi-access edge computing (multi-access edge computing, MEC) or of another edge data center close to the RAN node. A terminal compute resource pool includes a compute node 1 to a compute node p. m, n, and p are all positive integers. The compute node may be a device having a computational capability, for example, a physical machine, a virtual machine, or a device of another type. The compute node in the terminal compute resource pool may be a terminal device.

The intelligent service, for example, an intelligent service in a 6G network, may be described by using a workflow. The workflow may include one or more tasks. The task may be a process of completing a specific goal through multidimensional resource collaboration at a network layer. Based on different purposes, the tasks may be classified into different types of tasks such as AI inference, AI training, computing, and perception. The orchestration function may orchestrate a workflow, for example, assess a resource requirement of a task. The scheduling function may determine scheduling information for a task in the workflow, including allocating a compute node to an execution unit required by the task. The status collection function may record information related to the compute node and the task, and may be used by another device, network function, or module to store, query, update, or delete data. The computational power assessment function may predict duration for processing the task in the workflow by the compute node, a resource requirement for processing the task by the compute node, or the like.

A module in the compute node may be configured to implement the foregoing intelligent service, and a module that is in the compute node and that performs task processing when implementing the intelligent service may be referred to as an execution unit. Tasks may be of different types, and the execution unit may be reused to execute tasks of a same type.

The execution unit may process a task by using an AI model, program code, or the like, and an instance of the execution unit is executed in a host environment of a compute node in a process or thread manner; or the AI model, the program code, or the like used during task processing may be constructed as a container image of the execution unit, and an instance of the execution unit runs in a container manner; or the AI model, the program code, or the like used during task processing may be constructed as a virtual machine image of the execution unit, and an instance of the execution unit runs in a virtual machine manner; or the AI model, the program code, and the like used during task processing may be constructed as another format of the execution unit, and an instance of the execution unit runs in another manner. This is not limited in this application.

To accelerate a task processing speed, the execution unit in the compute node has the foregoing heterogeneous characteristic. In addition, processors of the compute node, such as CPUs, which have different architectures and different dominant frequencies, and different types of accelerators in the intelligent computing field, such as graphics processing units (graphics processing units, GPUs), neural processing units (neural processing units, NPUs), and tensor processing units (tensor processing units, TPUs), all aggravate heterogeneity between compute nodes. Therefore, for a heterogeneous compute node, how to implement management, orchestration, and scheduling is receiving increasing attention. Accurate prediction of task processing duration of the compute node helps implement management, orchestration, and scheduling of the compute node.

Therefore, for the foregoing problem, in embodiments of this application, a first model corresponding to a compute node group is introduced, and task processing duration of the compute node group is predicted based on the first model, computational power information of the compute node group, and task information, to accurately predict task processing duration when the compute node group executes different tasks.

This application is applicable to prediction of task processing duration of a compute node in any compute resource pool, and in particular, is applicable to prediction of task processing duration of a heterogeneous compute node.

It should be understood that the 6G network is used as an example above for description, and this is not limited in this application. For example, the technical solutions provided in this application may be further applied to: a long term evolution (long term evolution, LTE) system, an LTE frequency division duplex (frequency division duplex, FDD) system, an LTE time division duplex (time division duplex, TDD) system, a sidelink (sidelink, SL) communication system, a universal mobile telecommunications system (universal mobile telecommunications system, UMTS), a worldwide interoperability for microwave access (worldwide interoperability for microwave access, WiMAX) communication system, a fifth generation (5th generation, 5G) mobile communication system, a new radio access technology (new radio access technology, NR) system, or the like. The 5G mobile communication system may include non-standalone (non-standalone, NSA) networking and/or standalone (standalone, SA) networking. The technical solutions provided in this application may be further applied to a future communication system.

The following describes, with reference to accompanying drawings, a method for predicting task processing duration provided in an embodiment of this application.

It should be understood that the following description is for ease of understanding and explanation only, and uses interaction between a first apparatus and a second apparatus as an example to describe the method provided in this embodiment of this application. A functional module for implementing a computational power assessment function may be deployed in the first apparatus, and a functional module for implementing another function may be deployed in the second apparatus, for example, a functional module with a scheduling function and/or a functional module with an orchestration function. For example, the first apparatus and the second apparatus each may be the RAN node 110 or a device in the core network 200 in FIG. 1.

It should be further understood that this should not constitute any limitation on an execution entity of the method provided in this application. Any apparatus may serve as the execution entity of the method provided in embodiments of this application, provided that the apparatus can perform the method provided in embodiments of this application by running a program that includes code of the method provided in embodiments of this application. For example, the first apparatus may also be a component in a device (for example, a device in the RAN node 110 or the core network 200), for example, a chip, a chip system, or another functional module that can invoke a program and execute the program. The second apparatus may also be a component in a device (for example, a device in the RAN node 110 or the core network 200), for example, a chip, a chip system, or another functional module that can invoke a program and execute the program.

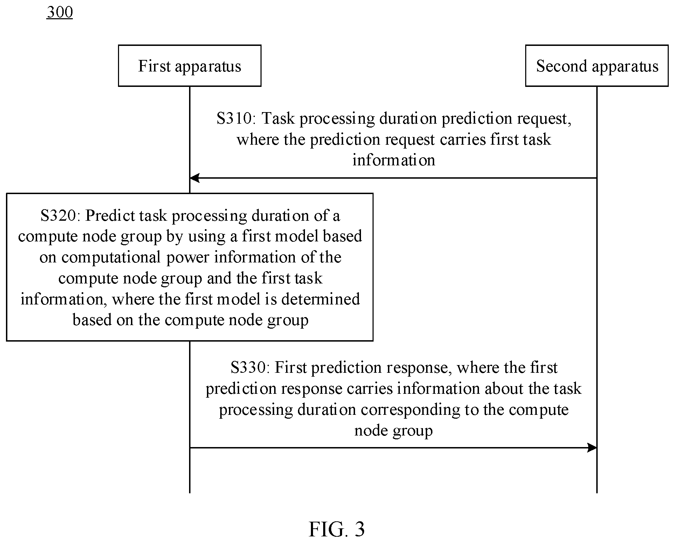

FIG. 3 is a schematic interaction flowchart of a method for predicting task processing duration according to an embodiment of this application. With reference to FIG. 3, the method 300 includes at least some of the following steps. S310: A second apparatus sends a task processing duration prediction request to a first apparatus, where the prediction request carries first task information. Correspondingly, the first apparatus receives the task processing duration prediction request from the second apparatus.

S320: The first apparatus predicts task processing duration of a compute node group by using a first model based on computational power information of the compute node group and the first task information, where the first model is determined based on the compute node group.

S330: The first apparatus sends a first prediction response to the second apparatus, where the first prediction response carries information about the task processing duration corresponding to the compute node group. Correspondingly, the second apparatus receives the first prediction response from the first apparatus.

The first task information carries information about a to-be-executed task, so that the first apparatus determines task processing duration of the compute node group for a specific task, thereby improving prediction accuracy. It should be understood that the to-be-executed task carried in the first task information is not limited in this application to a first task in the following description. The to-be-executed task carried in the first task information is the first task in the following description only when the to-be-executed task carried in the first task information is not executed or is not successfully executed.

It should be noted that "first" in the first task information is merely used to distinguish from second task information used to predict task resource information in the following description. Similarly, prefix words such as "first" and "second" in this application are all used to facilitate distinguishing and description of different things belonging to a same name category, and does not restrict a sequence, a size, or a quantity of the things. For example, "first model", "second model", "third model", and "fourth model" in the following description are merely different models, and there is no priority relationship between the four models.

For example, the first task information may include at least one of the following information about the to-be-executed task.
1. A resource parameter, indicating a resource type and a quantity of resources for performing task processing. For example, the resource parameter may be a 2-tuple list including the resource type and the quantity of resources. The resource may be a resource required when an execution unit performs execution in the foregoing example. Resource types may include CPU, GPU, NPU, system memory, and the like. The resource types may further include processor architecture and/or model, for example, CPU architecture or model, GPU architecture or model, and NPU architecture or model. For example, different positive integers may be used to represent different resource types.
2. A task parameter, indicating a parameter used for task processing. Different types of execution units correspond to different types of task parameters.

For example, when the execution unit includes a third model used for task processing, the task parameter may include model structure information of the third model. For example, the task parameter may indicate a structure of the third model, including a feature matrix and/or an adjacency matrix. The feature matrix includes features of different operators of a neural network in an AI model, for example, operator types, operator sizes (that is, dimensions of input and output tensors of the operators), and operator computational complexity. The adjacent matrix includes a connection relationship between operators. For another example, the task parameter may include an operator type, an operator size, and operator calculation complexity of a neural network in an AI model. For another example, when the execution unit includes first code used for task processing, the task parameter may include information about the first code, the information about the first code may include an abstract syntax tree of the code, and the abstract syntax tree may be obtained through conversion from the first code by using a compilation tool. The first code may be a segment of code used for task processing, and the first code may be designed based on any programming language or programming environment.

3. Information about input data. The information about the input data indicates a size of the input data required for task processing. For example, when the execution unit performs task processing based on the third model, the information about the input data may indicate a size of data input into the third model.

It should be understood that information included in the first task information, such as the resource parameter, the task parameter, and the information about the input data, is all associated with the task processing duration.

It should be further understood that, when the first task information does not carry one or more pieces of information in the foregoing example, the information that is not carried may be preset or pre-agreed. For example, when the first task information does not carry the information about the input data, the data input into the third model or the first code may be data of a unit size. If the third model or the first code requires a fixed size of the input data, the unit size is a fixed size of the input data. If the third model or the first code supports a size of input data of a variable length, for example, an array or a list of input data, or supports input data of a plurality of batches, the unit size is a size of one piece of input data in the array or list of the input data, or a size of one batch of input data in the plurality of batches of input data.

For example, the prediction request in S310 may further carry a type identifier of a task. The type identifier is used to uniquely identify a type of task. Because there is a correspondence between a task type and an execution unit, the type identifier may be further used to uniquely identify a type of an execution unit that executes the task.

For example, a task processing duration prediction request may be sent by a demander for prediction of task processing duration. For example, a scheduling function may send the prediction request to obtain predicted task processing duration, and then schedule the task based on the predicted task processing duration. For another example, an orchestration function may send the prediction request to obtain predicted task processing duration, and then orchestrate the task based on the predicted task processing duration. For still another example, when the task processing duration is applied to orchestration and scheduling, the orchestration function and the scheduling function may collaboratively send the prediction request. For example, the orchestration function may send job description information to the scheduling function, and then the scheduling function sends the prediction request to a computational power assessment function. This is not limited in this application.

The compute node group may include M compute nodes, and M is a positive integer. Compute nodes in the compute node group may be associated or not associated. Generally, because the first model corresponds to the compute node group, a higher correlation between the compute nodes in the compute node group indicates higher prediction accuracy of the task processing duration. A measurement standard for the correlation between the compute nodes is not limited in this application. For example, when a value of at least one computational power parameter is the same or has a difference less than a threshold for the M compute nodes, it is determined that the compute nodes in the compute node group are correlated. Optionally, the first apparatus may perform grouping based on the correlation between the compute nodes to obtain at least one compute node group, so as to ensure that the compute nodes in the compute node group are correlated. For a specific grouping manner, refer to the following example.

The compute node group may be preset or obtained through pre-grouping. For example, the first apparatus groups a plurality of compute nodes in advance to obtain at least one compute node group. The compute node group described above may be any preset compute node group, or any one of the at least one compute node group obtained through grouping. For specific implementation in which the first apparatus obtains the at least one compute node group through pre-grouping, refer to the following example.

The first model may be a pre-trained AI model used to predict the task processing duration. An input into the first model may include the computational power information of the compute node group and the first task information, and an output of the first model may include information about the task processing duration. It should be noted that the computational power information of the compute node group may include computational power information of each compute node in the compute node group. To reduce overheads, when computational power information of the compute nodes in the compute node group is different, the computational power information of the compute node group may be computational power information of any compute node in the compute node group, or the computational power information of the compute node group may be determined based on computational power information of the M compute nodes, for example, the computational power information of the compute node group is an average value of the computational power information of the M compute nodes. The computational power information of the compute node includes at least one computational power parameter of the compute node. The at least one computational power parameter may include at least one of an architecture name of a processor, a name of a processor, a quantity of processors, an extended instruction set, a system memory size, an accelerator model, a name of an accelerator, a quantity of accelerators, a memory size of an accelerator, a hard disk storage size, or an operating system type.

For example, the computational power information of the compute node may be expressed in a manner of traversing all combinations of the at least one computational power parameter and representing each combination in an encoding manner. For example, a two-dimensional matrix formed by a plurality of one-dimensional arrays may be used to express the computational power information of the compute node. Each one-dimensional array in the two-dimensional matrix represents a first-level index, a second-level index, ..., a K-level index of the computational power information of the compute node from left to right, respectively. The first-level index is a first number in the one-dimensional array, and different positive integers are used to represent resource types, such as a processor, a system memory, an accelerator, and an accelerator memory. The second-level index is a second number in the one-dimensional array, different positive integers are used to represent architecture names or models of resources in the first-level index, and if the resource type does not exist or the resource type has no architecture name or model, 0 may be used for representation. The third-level index is a third number in the one-dimensional array, different positive integers are used to represent names of resources in the first-level index, and if the resource type does not exist or the resource type has no name, 0 may be used for representation. The fourth-level index is a fourth number in the one-dimensional array, different positive integers are used to represent numbers or sizes of resources in the first-level index, and if the resource type does not exist, 0 may be used for representation. An index of another level may also be used to express another computational power parameter, which is not described again.

It should be understood that an expression manner of the computational power information of the compute node is not limited in embodiments of this application. It should be further understood that the computational power information of the compute node group may be expressed in a manner the same as or similar to the computational power information of the compute node.

The information about the task processing duration output by the first model is information indicating the task processing duration of the compute node group. The task processing duration may indicate task processing duration when any compute node in the M compute nodes processes a task corresponding to the first task information.

It should be noted that a quantity of compute node groups is not limited in embodiments of this application. The task processing duration prediction request may include a plurality of pieces of first task information, and different pieces of first task information may correspond to different compute node groups. In other words, different types of tasks may be executed by compute nodes in different compute node groups. The first apparatus may predict task processing duration of each compute node group based on a first model corresponding to the compute node group as well as computational power information of the compute node group and first task information corresponding to the compute node group.

The first apparatus sends the information about the predicted task processing duration to the second apparatus, and the second apparatus may schedule and/or orchestrate the task based on the task processing duration. This application does not limit that the first apparatus sends the information about the task processing duration to the second apparatus. For example, the first apparatus may further send the information about the task processing duration to another apparatus, for example, send the information about the task processing duration to a display apparatus, to present the task processing duration.

For example, the information about the task processing duration may be carried in the first prediction response, and the first apparatus sends the first prediction response to the second apparatus to transmit the information about the task processing duration of the compute node group. Optionally, the first prediction response includes an identifier of the compute node group and the information about the task processing duration. For example, the first prediction response may include a 2-tuple including the identifier of the compute node group and the information about the task processing duration. When the first prediction response includes information about a plurality of task processing durations of a plurality of compute node groups, the first prediction response may include a 2-tuple list including identifiers of the plurality of compute node groups and information about task processing duration corresponding to each compute node group.

In this embodiment of this application, the first apparatus predicts the task processing duration of the compute node group based on the first model, the computational power information of the compute node group, and the first task information, to accurately predict the task processing duration when the compute node group executes a task.

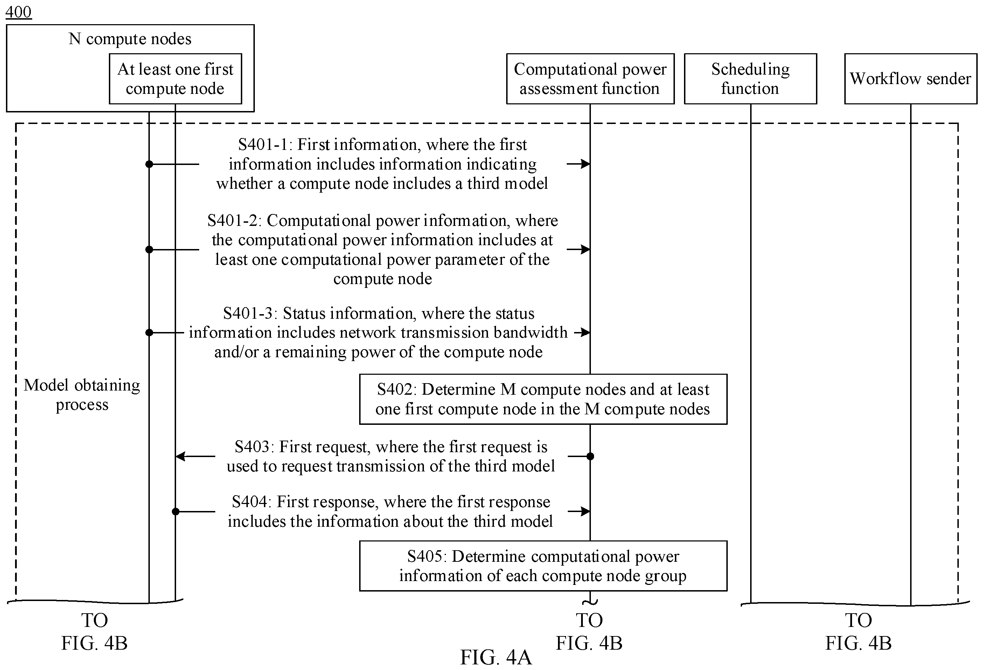

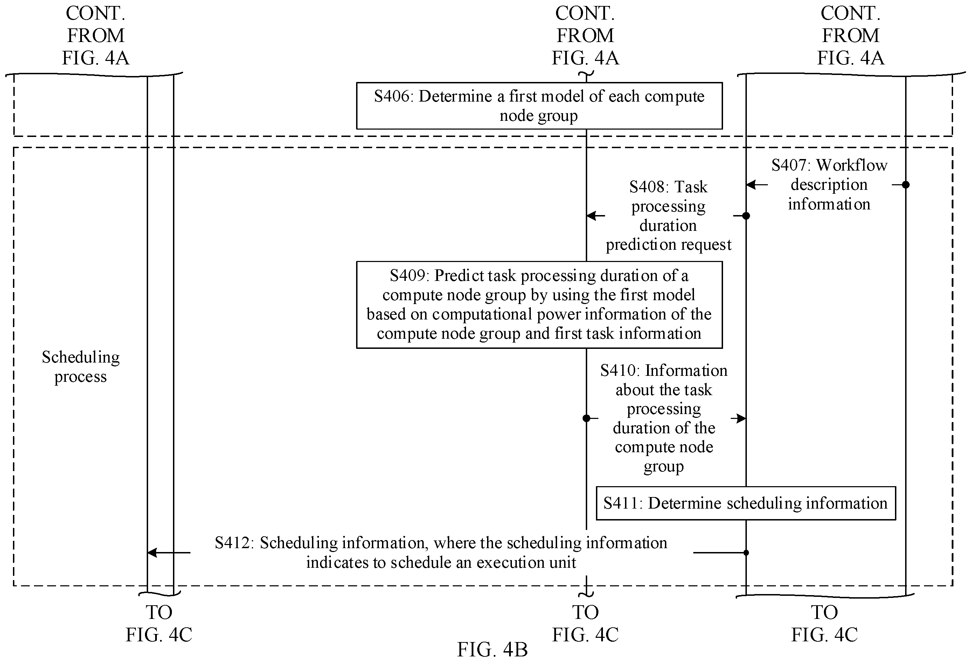

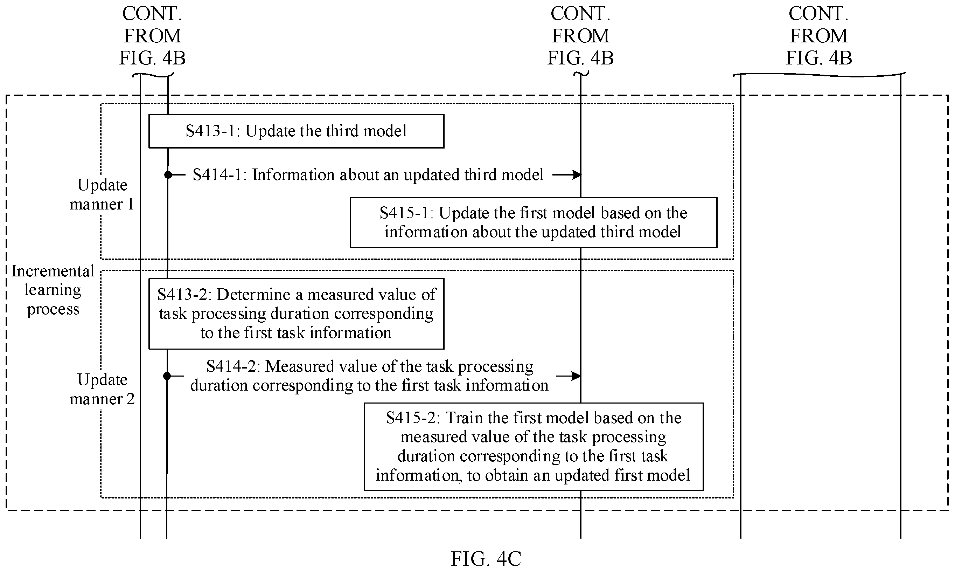

FIG. 4A, FIG. 4B, and FIG. 4C are a schematic interaction flowchart of a method for predicting task processing duration according to an embodiment of this application. In FIG. 4A, FIG. 4B, and FIG. 4C, an example in which a first apparatus is a computational power assessment function and a second apparatus is a scheduling function is used to describe this embodiment of this application with reference to another device (for example, a compute node) in a network. A workflow sender may be a user or another functional module, for example, an orchestration function. It should be understood that functions and devices shown in FIG. 4A, FIG. 4B, and FIG. 4C are merely examples, and do not constitute any limitation on this application. More or fewer functions and devices than those in FIG. 4A, FIG. 4B, and FIG. 4C may be included in this application.

With reference to a scheduling process in FIG. 4A, FIG. 4B, and FIG. 4C, the following uses an example in which predicted task processing duration is used to implement scheduling for description. With reference to FIG. 4A, FIG. 4B, and FIG. 4C, S408 to S410 have an implementation the same as or similar to S310 to S330 in the embodiment shown in FIG. 3, and technical solutions related to S310 to S330 are also applicable to this embodiment.

For example, before a scheduling function sends a task processing duration prediction request to a computational power assessment function, the method may further include S407. In S407, the workflow (workflow) sender may send workflow description information to the scheduling function, and correspondingly, the scheduling function receives the workflow description information sent by the workflow sender.

The workflow description information may include a task template, and the task template includes the first task information and the type identifier of the task in the foregoing example. It should be understood that when the workflow includes a plurality of tasks, the workflow description information may include a plurality of task templates, one or more task templates may form a task template list, and the workflow description information may further include a dependency relationship between the plurality of tasks.

The scheduling function can parse the workflow description information to obtain task templates corresponding to different tasks. Optionally, the scheduling function determines, for each task template, an identifier of at least one compute node group to form a preselected group identifier list. For example, the scheduling function may filter compute nodes based on a resource parameter in the task template. For example, the scheduling function determines, from a plurality of compute nodes, at least one compute node whose remaining resource meets the resource parameter in the task template, and an identifier of a compute node group to which the at least one compute node obtained through filtering belongs may form the preselected group identifier list.

Optionally, to reduce processing complexity, a part of preselected compute node groups may be further randomly selected from preselected compute node groups indicated by the selected preselected group identifier list, to form a new preselected group identifier list.

Optionally, the scheduling function may perform a deduplication (deduplication) operation on the preselected group identifier list, to reduce processing overheads.

Further, the scheduling function may generate a task processing duration prediction request based on a parsing result of the workflow description information. The task processing duration prediction request may carry the preselected group identifier list. The computational power assessment function predicts task processing duration of a corresponding compute node group based on the preselected group identifier list in the task processing duration prediction request. When the task processing duration prediction request does not carry the preselected group identifier list, the computational power assessment function may use all compute node groups that are preset or obtained through pre-grouping as the preselected compute node groups, or the computational power assessment function may select the preselected compute node groups through filtering from all the compute node groups. Filtering logic of the computational power assessment function is similar to filtering logic of the scheduling function in the foregoing example. For brevity, details are not described again.

It should be understood that filtering logic or a filtering algorithm of a preselected compute node group (or a preselected group identifier) is not limited in embodiments of this application.

Optionally, the scheduling function may store a correspondence between the type identifier of the task and the task template by using a status collection function.

For example, when predicting the task processing duration of the compute node group, the computational power assessment function may first determine a first model corresponding to the compute node group and computational power information corresponding to the compute node group, and then use the computational power information of the compute node group and the first task information as an input into the first model to predict the task processing duration.

Optionally, the status collection function may store a first correspondence. In the first correspondence, each compute node group in the at least one compute node group has a corresponding first model. The computational power assessment function may read the first correspondence from the status collection function, to determine, based on the first correspondence, a first model corresponding to a to-be-predicted compute node group (for example, the foregoing preselected compute node group). Optionally, the status collection function may store a second correspondence. In the second correspondence, each compute node group in the at least one compute node group has corresponding computational power information. The computational power assessment function may read the second correspondence from the status collection function, to determine, based on the second correspondence, computational power information corresponding to a to-be-predicted compute node group (for example, the foregoing preselected compute node group).

Optionally, in the first correspondence, each compute node group in the at least one compute node group further corresponds to a model description of the first model, and the model description indicates a type of input data and a type of output data of the first model.

Optionally, the type of the input data includes but is not limited to at least one of the following:
computational power information of a compute node group;
a resource parameter;
a task parameter; and
information about input data.

Optionally, the type of the output data includes but is not limited to the task processing duration.

For example, in S409, the computational power assessment function may traverse each preselected group identifier in the preselected group identifier list, obtain, based on the first correspondence and the second correspondence, the first model corresponding to the preselected group identifier and the computational power information of the compute node group, and then use the computational power information of the compute node group and the first task information as an input into the first model to determine task processing duration of each compute node group. In this way, a 2-tuple list including the identifier of the compute node group (or the group identifier) and the information about the task processing duration is obtained.

For example, in S411, the scheduling function may determine scheduling information by using a preset scheduling algorithm with reference to the 2-tuple list including the group identifier and the information about the task processing duration, and compute nodes (for example, the foregoing M compute nodes) in a compute node group corresponding to each group identifier in the 2-tuple list, where the scheduling information indicates to allocate an execution unit that performs task processing to a corresponding compute node. For example, the scheduling information may include an identifier of an execution unit, a type identifier of a task, and an identifier of a compute node.

In some embodiments, the first model corresponding to the compute node group may be obtained in advance by the computational power assessment function. For example, the first model may be determined based on a second model in at least one first compute node, the second model is used to predict task processing duration of a corresponding first compute node, and the M compute nodes include the at least one first compute node.

The following describes an example of a process of obtaining the first model with reference to S401 to S406 in FIG. 4A, FIG. 4B, and FIG. 4C. It should be noted that when the computational power assessment function obtains the first model, at least a part of steps in S401 to S406 may be performed.

Each of N compute nodes may report information to the computational power assessment function. The computational power assessment function groups at least a part of the N compute nodes based on the information separately reported by the N compute nodes, to obtain at least one compute node group. Each compute node group may include one or more compute nodes. For example, any compute node group in the at least one compute node group may include M compute nodes, the computational power assessment function may further determine at least one first compute node in each compute node group based on the information reported by the N compute nodes. In this embodiment, the first compute node is a compute node that provides the second model used for determining the first model. The N compute nodes may be all or a part of compute nodes in a resource pool, and the N compute nodes should include the M compute nodes. The N compute nodes are grouped, so that the M compute nodes in the N compute nodes are grouped into one compute node group.

The reported information may include but is not limited to at least one of first information, computational power information, or status information in the following description. It should be understood that the first information, the computational power information, and the status information may be carried in a same message for sending, or the first information, the computational power information, and the status information may be separately sent. This is not limited in this application. The following provides an example description with reference to S401-1 to S401-3.

In S401-1, each of the N compute nodes may send first information to the computational power assessment function, where the first information includes information indicating whether the compute node includes the second model. Optionally, when the compute node includes the second model, the first information further includes information indicating whether the compute node supports transmission of the second model. When the compute node does not support transmission of the second model, it may be considered that the compute node does not include the second model. It should be understood that, in S402, when determining the at least one first compute node in the M first compute nodes, the computational power assessment function may determine all compute nodes that are indicated by the first information and that include the second model as the first compute nodes, or may obtain the at least first compute node through filtering from compute nodes that are indicated by the first information and that include the second model.

In S401-2, each of the N compute nodes may send computational power information to the computational power assessment function. The computational power information is similar to the computational power information of the compute node in the foregoing example. For brevity, details are not described again.

As described above, a higher correlation between compute nodes in the compute node group indicates higher prediction accuracy of the task processing duration. Therefore, in some embodiments, at least one computational power parameter is the same for the M compute nodes, to ensure the correlation between compute nodes in the compute node group.

In view of this, in S402, the computational power assessment function may perform grouping based on the information reported by each of the N compute nodes, to obtain at least one compute node group, where one compute node group in the at least one compute node group includes the M compute nodes. For example, the computational power assessment function may group compute nodes with all same computational power parameters into one group, or group compute nodes with a part of same computational power parameters into one group. For example, when the computational power information includes an architecture name of a processor, a name of a processor, a quantity of processors, an extended instruction set, a system memory size, a model of an accelerator, a name of an accelerator, a quantity of accelerators, a memory size of an accelerator, a hard disk storage size, and an operating system type, compute nodes that have all same computational power parameters in the computational power information are grouped into one group; or compute nodes that have a same architecture name of a processor, a same name of a processor, a same quantity of processors, a same system memory size, a same model of an accelerator, a same quantity of accelerators, and a same operating system type are grouped into one group; or compute nodes that have a same architecture name of a processor, a same quantity of processors, a same system memory size, a same model of an accelerator, and a same quantity of accelerators are grouped into one group.

It should be understood that a grouping manner of the compute nodes is not limited in this application, and the foregoing grouping is merely an example for description. For example, the computational power assessment function may perform grouping based on a remaining power of the compute node or historical data (for example, processing duration of a historical task) of the compute node.

Optionally, the status collection function may store a third correspondence. In the third correspondence, at least one compute node included in each of the at least one compute node group obtained by grouping, for example, the foregoing M compute nodes, corresponds to one compute node group in the third correspondence. For example, the third correspondence may be a correspondence between an identifier of one compute node group and a node identifier of at least one compute node included in the compute node group.

For example, as shown in S405 in FIG. 4A, FIG. 4B, and FIG. 4C, the computational power assessment function may determine, based on computational power information of each of the N compute nodes, computational power information of each compute node group obtained through grouping. In an example, the computational power assessment function may use computational power information of any compute node in the compute node group as the computational power information of the compute node group. In another example, the computational power assessment function may determine the computational power information of the compute node group based on computational power information of at least two compute nodes in the compute node group, for example, perform quantized averaging on the computational power information of the at least two compute nodes, to obtain the computational power information of the compute node group. It should be understood that the computational power assessment function may alternatively determine the computational power information of the compute node group in another manner. This is not limited in this application.

It should be understood that an execution sequence of S405 and S402 to S404 is not limited in this application.

Optionally, the computational power assessment function may determine the second correspondence based on computational power information corresponding to each compute node group obtained through grouping, and store the second correspondence in the status collection function.

In S401-3, each of the N compute nodes may send status information to the computational power assessment function, where the status information includes network transmission bandwidth and/or a remaining power of the compute node. The status information may be used to determine the at least one first compute node. For example, in S402, the computational power assessment function may select the first compute node from the M compute nodes based on the first information and the computational power information. For example, the computational power assessment function may obtain a candidate compute node list based on the first information of each of the M compute nodes, where the candidate compute node list includes a compute node on which the second model is deployed. Further, the computational power assessment function may determine any compute node in the candidate compute node list as the first compute node. Alternatively, the computational power assessment function may obtain one or more first compute nodes from the candidate compute node list through filtering based on status information of each compute node in the candidate compute node list. For example, the computational power assessment function selects, as the first compute node, first one or more compute nodes whose network transmission bandwidths are arranged in descending order in candidate compute nodes. For another example, the computational power assessment function selects, as the first compute node, first one or more compute nodes whose remaining powers are arranged in descending order from candidate compute nodes. For still another example, the computational power assessment function selects, as the first compute node, first one or more compute nodes whose weighted sums of network transmission bandwidth and node remaining power are arranged in descending order from candidate compute nodes.

Optionally, the information reported by each of the N compute nodes to the computational power assessment function may further include an identifier of a compute node, and the identifier of the compute node is used to uniquely identify one compute node.

It should be noted that the identifier of the compute node is merely an example, and not limited in this application, and may be replaced with any other information that can indicate the compute node. A type identifier of any task (for example, the first task or a reference test task) in the following description is also an example for description, and may be replaced with any other information that may indicate a task type.

Optionally, the computational power assessment function may store, in the status collection function, the information reported by each of the N compute nodes.

In S403, the computational power assessment function sends, based on the at least one first compute node in the compute node group determined in S402, a first request to each of the at least one first compute node, where the first request is used to request the first compute node to send the information about the second model. In S404, each of the at least one first compute node may send a first response to the computational power assessment function in response to the first request, where the first response includes the information about the second model.

The information about the second model may include model structure information and/or model parameter information. Generally, the second model may be expressed based on the information about the second model. In other words, the computational power assessment function may construct the second model based on the received information about the second model. It should be understood that model information not included in the information about the second model may be agreed on in a protocol, or preconfigured, or preset in the computational power assessment function. For example, the model structure information may be agreed on in a protocol, or preconfigured, or preset in the computational power assessment function.

In S406, the computational power assessment function may determine, based on the information about the second model sent by the at least one first compute node, a first model of a compute node group to which the at least one first compute node belongs. In some embodiments, when receiving the information about the second model sent by a first compute node, the computational power assessment function may use the second model as the first model; and when receiving the information about the second model sent by at least two first compute nodes separately, the computational power assessment function may use any one of the at least two second models as the first model, or determine the first model based on information about the at least two second models, for example, obtain the first model by merging model parameters of the at least two second models. An implementation of merging the model parameters is not limited in this application. For example, the model parameters may be merged by performing quantized averaging on the model parameters of the at least two second models. In some other embodiments, the computational power assessment function may determine the first model based on the information about the second model sent by the at least one first compute node and information about a known model. Similar to the foregoing content, the computational power assessment function may use any one of the at least one second model and the known model as the first model, or combine model parameters based on the information about the at least one second model and the known model, to obtain the first model, where the known model may be a model obtained in advance by the computational power assessment function, for example, obtained through pre-training by the computational power assessment function or received from and sent by another device or functional module.

For example, the first response may further carry a model description of the second model. The model description of the second model indicates a type of input data of the second model and a type of output data of the second model. The type of the input data of the second model is similar to the type of the input data of the first model, and the type of the output data of the second model is similar to the type of the output data of the first model. For brevity, details are not described again. The model description of the first model may be determined based on the model description of the second model.

For example, when the first response does not carry the model description of the second model, the model description may be agreed on in a protocol, preconfigured, or preset in a device. This is not limited in this application.

Optionally, the first request may further include third indication information, and the third indication information indicates the first compute node whether to update the second model. When the third indication information indicates the first compute node to update the second model, the first compute node may update the second model (or referred to as incremental learning). When the third indication information indicates the first compute node not to update the second model, the first compute node does not update the second model, or the first compute node assists the computational power assessment function in updating the first model.

Embodiments of this application provide two possible manners of incremental learning of the first model. The following describes an example of an incremental learning process of the first model with reference to FIG. 4A, FIG. 4B, and FIG. 4C.

### Update manner 1:

S413-1: The first compute node updates the second model. For example, the first compute node may update the second model based on a second training dataset, where each piece of second training data in the second training dataset includes a feature and a label, and the label is a measured value of task processing duration corresponding to the feature.

For example, the first compute node may construct the second training dataset. For example, after receiving scheduling information, the first compute node may load a corresponding execution unit, create an execution unit instance with reference to the resource parameter in the first task information, and execute a corresponding task. When executing a task, the first compute node records a start time and a completion time of the task, to obtain a measured value of task processing duration of the task. The computational power information of the compute node and the first task information are the feature of the second training data, the measured value of the task processing duration is the label of the second training data.

Optionally, a label of second training data in the second training dataset may alternatively be entered by a user. This is not limited in this application.

Optionally, when the third indication information indicates the first compute node to update the second model, the first compute node may determine to update the second model.

Optionally, when the first compute node determines to update the second model, the first compute node performs incremental learning to update the second model when determining that a quantity of pieces of second training data in the second training dataset is greater than a threshold. The threshold may be, for example, any value such as 1, 10, or 100.

Optionally, to improve prediction accuracy of the second model, the first compute node may perform incremental learning on an unexecuted task. For example, when identifying the first task information, and determining that the first task information corresponds to a first task that is not executed, the computational power assessment function sends fourth indication information to the first compute node, to indicate the first compute node to generate the label of the second training data for the first task. Optionally, the fourth indication information may carry a type identifier of the first task.

Optionally, the computational power assessment function may store a correspondence between the type identifier of the first task and the first task information in the status collection function.

S414-1: The first compute node sends information about an updated second model to the computational power assessment function.

S415-1: The computational power assessment function updates the first model based on the information about the updated second model. For example, the computational power assessment function may use the updated second model as an updated first model, or the computational power assessment function may determine an updated first model based on a plurality of updated second models, for example, obtain the updated first model by merging model parameters of the plurality of updated second models.

### Update manner 2:

S413-2: The first compute node determines a measured value of task processing duration corresponding to the first task information. In other words, the first compute node determines a label of the second training data. Optionally, the first compute node may construct the second training data based on the measured value of the task processing duration, and add the second training data to the second training dataset.

S414-2: The first compute node may send, to the computational power assessment function, the measured value of the task processing duration corresponding to the first task information. Optionally, if the first compute node constructs the second training data based on the measured value of the task processing duration, S414-2 may be replaced with the following: The first compute node sends the second training data or the second training dataset to the computational power assessment function.

S415-2: The computational power assessment function may train the first model based on the measured value of the task processing duration corresponding to the first task information, to obtain the updated first model.

For example, the computational power assessment function may construct the second training data based on the measured value of the task processing duration corresponding to the first task information, and add the second training data to the second training dataset, so as to update the first model based on the second training dataset. Optionally, that the computational power assessment function updates the first model based on the second training dataset may include: directly using the second training dataset to perform iterative training on the first model, or training, based on the second training dataset, a second model sent by a corresponding compute node to obtain an updated second model, and then updating the first model based on the updated second model. This is not limited in this application.

It should be noted that for a manner of constructing the second training data and the second training dataset in Update manner 2, refer to the description in the foregoing Update manner 1. For brevity, details are not described again.

Optionally, when the first compute node sends the second training data or the second training dataset to the computational power assessment function, the computational power assessment function does not need to perform a process of constructing the second training dataset.

Optionally, a label of second training data in the second training dataset may alternatively be entered by a user. This is not limited in this application.

Optionally, when the third indication information indicates the first compute node not to update the second model, the first compute node may determine the measured value of the task processing duration of the first task information, and send the measured value of the task processing duration.

Optionally, when determining that the quantity of pieces of second training data in the second training dataset is greater than the threshold, the computational power assessment function performs incremental learning to update the first model. The threshold may be, for example, any value such as 1, 10, or 100.

Optionally, to improve prediction accuracy of the second model, incremental learning may be performed on an unexecuted task. For example, when identifying the first task information, and determining that the first task information corresponds to a first task that is not executed, the computational power assessment function sends fourth indication information to the first compute node, to indicate the first compute node to generate the label of the second training data for the first task. Optionally, the fourth indication information may carry a type identifier of the first task. Optionally, the computational power assessment function may store a correspondence between the type identifier of the first task and the first task information in the status collection function.

In some scenarios, the computational power assessment function expects to obtain the second model based on a compute node, on which no second model is deployed, in the M compute nodes. For example, the compute node on which no second model is deployed is more likely to perform task processing. For example, a compute node has relatively large network transmission bandwidth and/or a relatively large remaining power. Therefore, considering that the first model corresponding to the compute node group is determined based on a second model in the compute node, the task processing duration may be more accurately predicted. For another example, no second model is deployed on the M compute nodes.

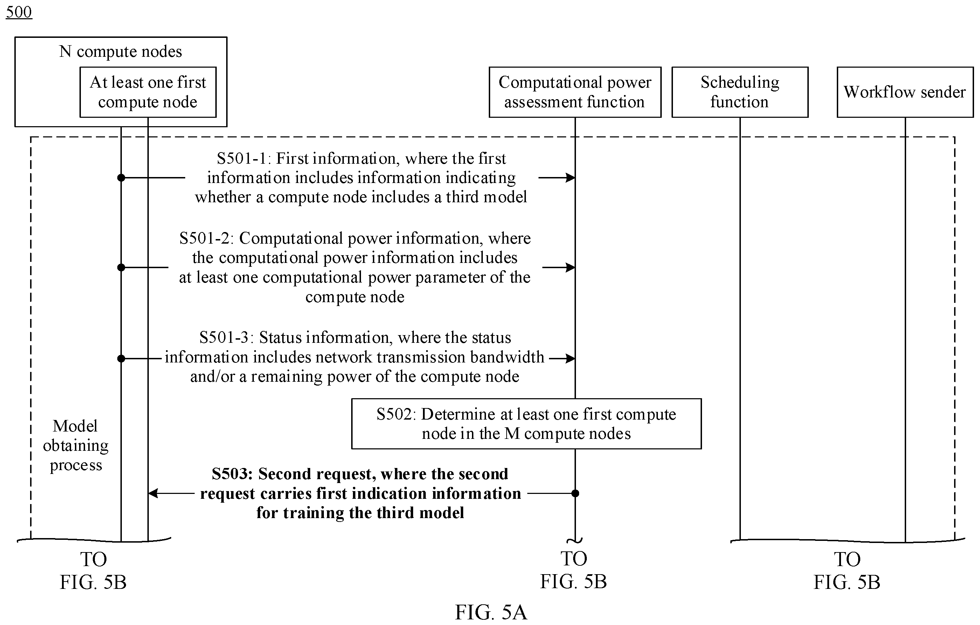

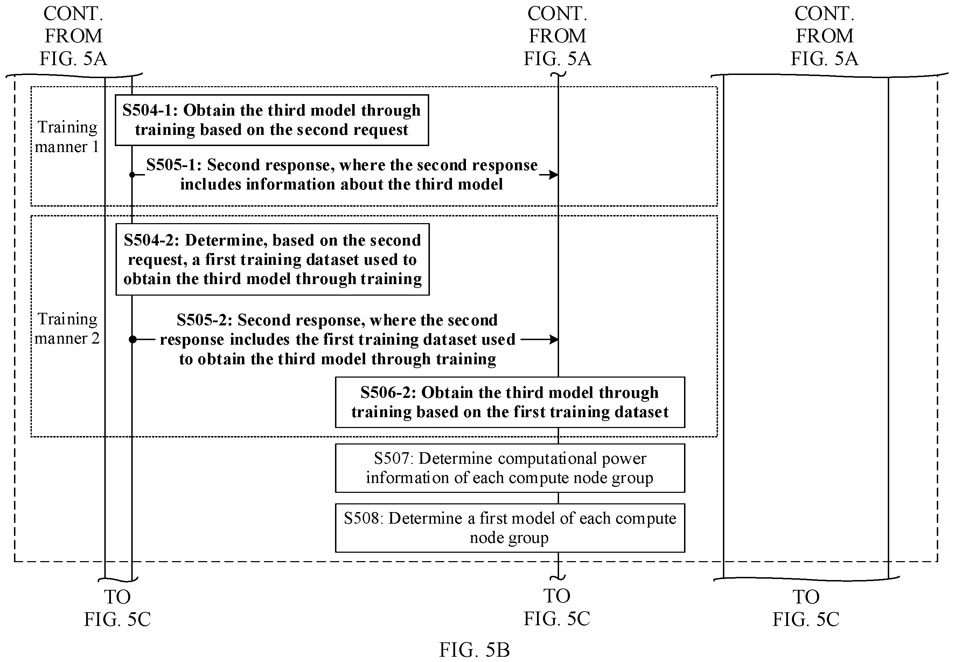

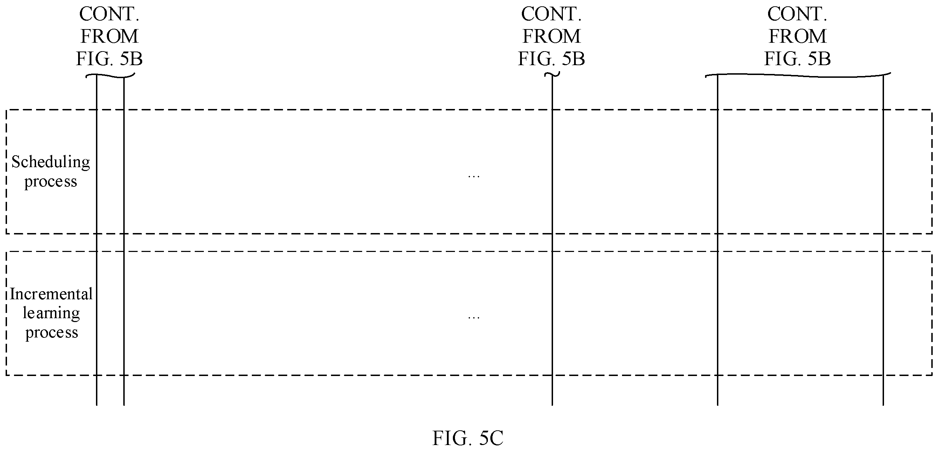

In view of this, the computational power assessment function may request at least one of the M compute nodes to obtain the second model through model training. The following describes an embodiment with reference to FIG. 5A, FIG. 5B, and FIG. 5C. S501 and S502 in FIG. 5A, FIG. 5B, and FIG. 5C are similar to S401 and S402 in FIG. 4A, FIG. 4B, and FIG. 4C, and a difference lies in that no second model is deployed on a first compute node.

S503: A computational power assessment function sends a second request to the first compute node, where the second request carries first indication information for training a second model. The first indication information indicates the first compute node whether to obtain the second model through training. The following describes this embodiment as an example based on an indication of the first indication information by using two possible training manners.

### Training manner 1:

S504-1: The first compute node obtains the second model through training based on the second request. For example, when the first indication information indicates the first compute node to obtain the second model through training, the first compute node obtains the second model through training based on a first training dataset. Each piece of first training data in the first training dataset includes a feature and a label, and the label is a measured value of task processing duration corresponding to the feature.

For example, the first compute node may construct the first training dataset. For example, the second request may carry test task information and/or second indication information, where the second indication information indicates to generate the label in the first training dataset. Optionally, the second indication information may carry a type identifier of a reference test task. The test task information includes at least one of a resource parameter, a task parameter, or information about input data. The type identifier of the reference test task is used to determine the reference test task. The reference test task is used to generate a measured value of task processing duration based on computational power information of the first compute node and the test task information.

In a process in which the first compute node constructs the first training dataset, the first compute node may use the computational power information of the first compute node and the test task information as an input into a reference test task model, and output the measured value of the task processing duration by using the reference test task model. The computational power information of the first compute node and the test task information are used as the feature of the first training data, and the measured value of the task processing duration is used as the label of the first training data.

Optionally, if the second request does not carry the resource parameter, the first compute node may determine all possible resource parameters, for example, all possible combinations of resource types and resource quantities, by traversing an available resource list in the first compute node. When there are a relatively large quantity of possible resource parameters, possible combinations of the resource parameters may be filtered, to improve processing efficiency.

Optionally, if the second request does not carry the information about the input data, the first compute node may generate information about all possible input data based on a preset threshold of the input data. When there is a relatively large amount of information about the possible input data, possible values of the information about the input data may be filtered, to improve processing efficiency.

Optionally, the second request may further carry a model structure of the second model, and the first compute node obtains the second model through training based on the first training dataset and the model structure of the second model.

Optionally, the second request may further carry a model description of the second model. The model description herein is similar to the model description in the foregoing example. For brevity, details are not described again.

For example, the first compute node may download an execution unit of the reference test task based on the type identifier of the reference test task; traverse the resource parameters and the information of the input data, and create an execution unit instance of the reference test task, with reference to the resource parameter, for each possible 2-tuple including a resource parameter and information of input data; and execute the reference test task based on the information about the input data, and record a start time and a completion time of execution of the reference test task to obtain the measured value of the task processing duration of the reference test task. After the traversal is complete, a four-tuple list including the type identifier of the reference test task, the resource parameter, the information of the input data, and the measured value of the task processing duration is obtained.

Optionally, when determining to train the second model, and when determining that a quantity of pieces of first training data in the first training dataset is greater than a threshold the first compute node performs model training to obtain the second model. The threshold may be, for example, any value such as 1, 10, or 100.

Optionally, the label in the first training dataset may alternatively be entered by a user or sent by another device.

S505-1: The first compute node may send a second response to the computational power assessment function, where the second response includes the information about the second model.

### Training manner 2:

S504-2: The first compute node determines, based on the second request, a first training dataset used to obtain the second model through training. Optionally, when the first indication information indicates the first compute node not to train the second model or indicates to obtain the first training dataset, the first compute node determines the first training dataset used to obtain the second model through training. It should be understood that this step is the same as the process in which the first compute node constructs the first training dataset in Training manner 1. For brevity, details are not described again.

S505-2: The first compute node sends a second response to the computational power assessment function, where the second response includes the first training dataset.

S506-2: The computational power assessment function obtains the second model through training based on the first training dataset. It should be understood that a process in which the computational power assessment function obtains the second model through training based on the first training dataset is similar to the foregoing process in which the first compute node obtains the second model through training. For brevity, details are not described again.

S507 and S508 in FIG. 5A, FIG. 5B, and FIG. 5C are similar to S405 and S406 in the embodiment shown in FIG. 4A, FIG. 4B, and FIG. 4C. For brevity, details are not described again.

For both the scheduling process and the incremental learning process in the embodiment shown in FIG. 5A, FIG. 5B, and FIG. 5C, refer to related descriptions in FIG. 4A, FIG. 4B, and FIG. 4C. For brevity, details are not described again.

As described above, for a heterogeneous compute node, how to implement management, orchestration, and scheduling is receiving increasing attention. When a task processing duration requirement is determined, accurate prediction of task resource information of a compute node helps implement management, orchestration, and scheduling of the compute node. The task resource information may include a resource type and a quantity of resources used by the compute node to execute a task. For this problem, in this embodiment of this application, a fourth model corresponding to the compute node is introduced, and a task resource requirement of the compute node group is predicted based on the fourth model, computational power information of the compute node group, and the second task information, to accurately predict task resource information when the compute node group executes different tasks.

It should be understood that this application is applicable to prediction of task resource information of a compute node in any compute resource pool, and in particular, is applicable to prediction of task resource information of a heterogeneous compute node.

The following describes, with reference to accompanying drawings, a method for predicting task resource information provided in an embodiment of this application.

It should be understood that the following description is for ease of understanding and explanation only, and uses interaction between a first apparatus and a second apparatus as an example to describe the method provided this embodiment of this application. The first apparatus may be deployed with a functional module for implementing a computational power assessment function, and the second apparatus may be deployed with a functional module for implementing another function, for example, a functional module with a scheduling function and/or a functional module with an orchestration function. For example, the first apparatus and the second apparatus each may be the RAN node 110 or a device in the core network 200 in FIG. 1.

It should be further understood that this should not constitute any limitation on an execution entity of the method provided in this application. Any apparatus may serve as the execution entity of the method provided in embodiments of this application, provided that the apparatus can perform the method provided in embodiments of this application by running a program that includes code of the method provided in embodiments of this application. For example, the first apparatus may also be a component in a device (for example, a device in the RAN node 110 or the core network 200), for example, a chip, a chip system, or another functional module that can invoke a program and execute the program. The second apparatus may also be a component in a device (for example, a device in the RAN node 110 or the core network 200), for example, a chip, a chip system, or another functional module that can invoke a program and execute the program.

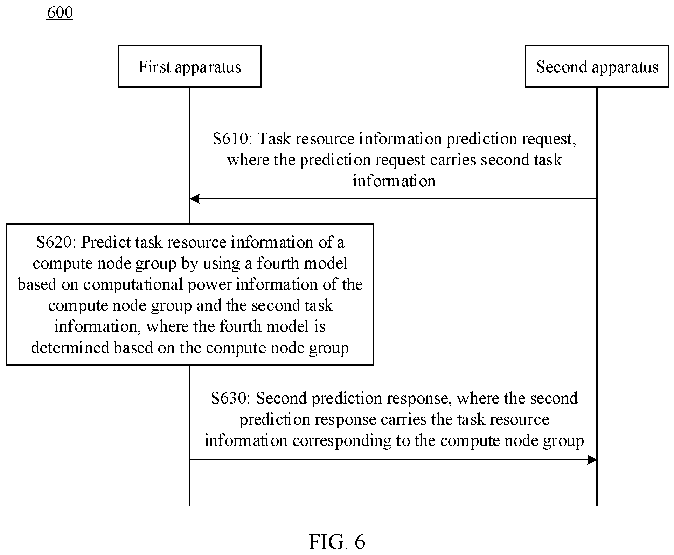

FIG. 6 is a schematic interaction flowchart of a method for predicting task resource information according to an embodiment of this application. With reference to FIG. 6, the method 600 includes at least some of the following steps. S610: A second apparatus sends a task resource information prediction request to a first apparatus, where the prediction request carries second task information. Correspondingly, the first apparatus receives the task resource information prediction request from the second apparatus.

S620: The first apparatus predicts task resource information of a compute node group by using a fourth model based on computational power information of the compute node group and the second task information, where the fourth model is determined based on the compute node group.

S630: The first apparatus sends a second prediction response to the second apparatus, where the second prediction response carries the task resource information corresponding to the compute node group. Correspondingly, the second apparatus receives the second prediction response from the first apparatus.

The second task information carries related information of a to-be-executed task, so that the first apparatus determines task resource information of the compute node group for a specific task, thereby improving prediction accuracy.

For example, the second task information may include at least one of the following information.
1. Expected duration. The expected duration is associated with the task resource information.
2. A task parameter.
3. Information about input data.

The task parameter and the information about the input data are described in the foregoing example. For brevity, details are not described again.

It should be understood that information included in the second task information, such as the expected duration, the task parameter, and the information about the input data, is all associated with the task resource information.

It should be further understood that, when the second task information does not carry one or more pieces of information in the foregoing example, the information that is not carried may be preset or pre-agreed. For example, when the second task information does not carry the information about the input data, data input into a third model may be data of a unit size.

For example, the prediction request in S610 may further carry a type identifier of the task. The type identifier of the task is described in the foregoing example. For brevity, details are not described again.

For example, a task resource information prediction request may be sent by a demander for prediction of task resource information. For example, a scheduling function may send the prediction request to obtain predicted task resource information, and then schedule the task based on the predicted task resource information. For another example, an orchestration function may send the prediction request to obtain predicted task resource information, and then orchestrate the task based on the predicted task resource information. For still another example, when the task resource information is applied to orchestration and scheduling, the orchestration function and the scheduling function may collaboratively send the prediction request. For example, the orchestration function may send the prediction request to obtain the predicted task resource information; and after orchestrating the task based on the predicted task resource information, send job description information to the scheduling function, and the scheduling function schedules the task. This is not limited in this application.

The compute node group may include M compute nodes. As described above, compute nodes in the compute node group may be correlated or not correlated. For whether the compute nodes in the compute node group are correlated with each other, refer to the description in the foregoing example. For brevity, details are not described again.

The fourth model may be a pre-trained AI model used to predict the task resource information. An input into the fourth model may include computational power information of the compute node group and the second task information, and an output of the fourth model may include the task resource information. For the computational power information of the compute node group, refer to the description in the foregoing example. For brevity, details are not described again. The task resource information output by the fourth model is the task resource information of the compute node group. The task resource information may be task resource information used when any compute node in the M compute nodes processes a task corresponding to the second task information.

It should be noted that a quantity of compute node groups is not limited in embodiments of this application. The second prediction request may include a plurality of pieces of second task information, and different pieces of second task information may correspond to different compute node groups. In other words, different types of tasks may be executed by compute nodes in different compute node groups. The first apparatus may predict task resource information of each compute node group based on a fourth model corresponding to the compute node group as well as computational power information of the compute node group and second task information corresponding to the compute node group.

The first apparatus sends the predicted task resource information to the second apparatus, and the second apparatus may schedule and/or orchestrate the task based on the task resource information. This application does not limit that the first apparatus sends the task resource information to the second apparatus. For example, the first apparatus may further send the task resource information to another apparatus, for example, send the task resource information to a display apparatus, to present the task resource information.

For example, the task resource information may be carried in the second prediction response, and the first apparatus sends the second prediction response to the second apparatus to transmit the task resource information of the compute node group. Optionally, the second prediction response includes an identifier of the compute node group and the task resource information. For example, the second prediction response may include a 2-tuple including the identifier of the compute node group and the task resource information. When the second prediction response includes a plurality of pieces of task resource information of a plurality of compute node groups, the second prediction response may include a 2-tuple list including identifiers of the plurality of compute node groups and task resource information corresponding to each compute node group.

In this embodiment of this application, the first apparatus predicts the task resource information of the compute node group based on the fourth model, the computational power information of the compute node group, and the second task information, to accurately predict the task resource information when the compute node group executes different tasks.

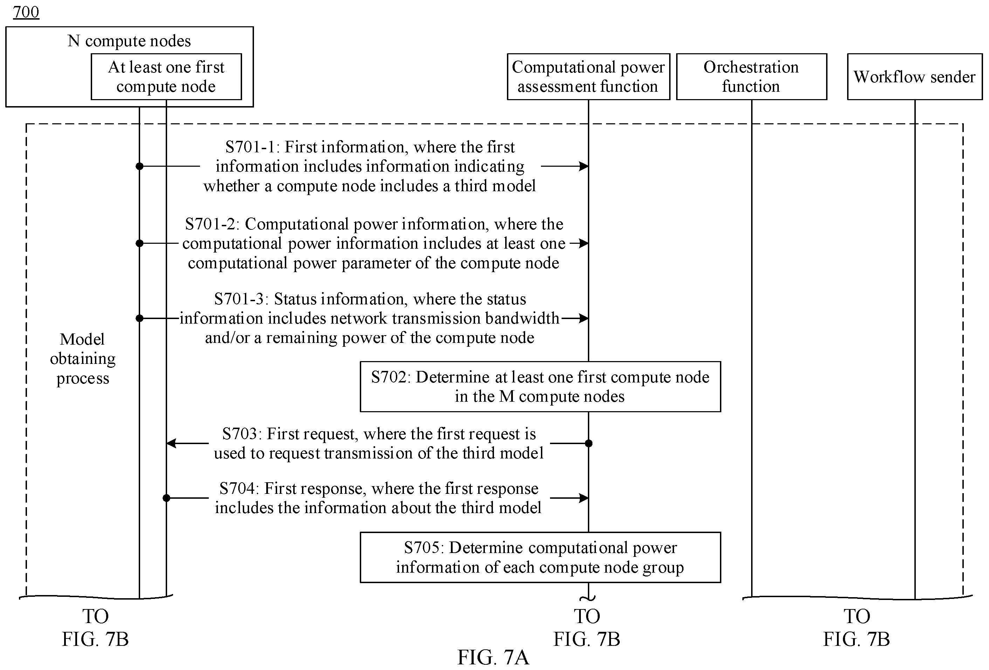

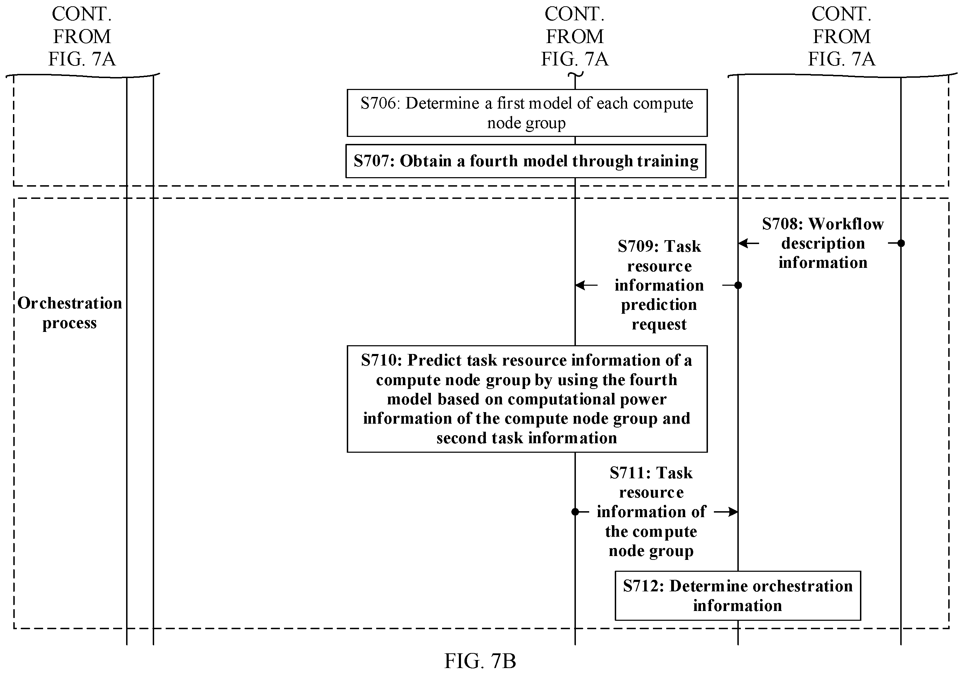

FIG. 7A and FIG. 7B are a schematic interaction flowchart of a method for predicting task resource information according to an embodiment of this application. In FIG. 7A and FIG. 7B, an example in which a first apparatus is a computational power assessment function and a second apparatus is an orchestration function is used to describe this embodiment of this application with reference to another device (for example, a compute node) in a network. A workflow sender may be a user or another functional module. It should be understood that functions and devices shown in FIG. 7A and FIG. 7B are merely examples, and do not constitute any limitation on this application. More or fewer functions and devices than those in FIG. 7A and FIG. 7B may be included in this application.

With reference to a scheduling process in FIG. 7A and FIG. 7B, the following uses an example in which predicted task resource information is used to implement orchestration for description. With reference to FIG. 7A and FIG. 7B, S709 to S711 have an implementation the same as or similar to S610 to S630 in the embodiment shown in FIG. 6, and technical solutions related to S610 to S630 are also applicable to this embodiment.

For example, before the orchestration function sends a task resource information prediction request to the computational power assessment function, the method may further include S708. In S708, the workflow sender may send workflow description information to the orchestration function, and correspondingly, the orchestration function receives the workflow description information sent by the workflow sender.

The workflow description information may include a task time limit template, and the task time limit template includes the second task information and the type identifier of the task in the foregoing example. It should be understood that when the workflow includes a plurality of tasks, the workflow description information may include a plurality of task time limit templates, one or more task time limit templates may form a task time limit template list, and the workflow description information may further include a dependency relationship between the plurality of tasks.

The orchestration function can parse the workflow description information to obtain task time limit templates corresponding to different tasks.

Optionally, the orchestration function determines, for each task time limit template, an identifier of at least one compute node group to form a preselected group identifier list. For example, the orchestration function may filter compute node groups based on expected duration in the task time limit template. For example, the orchestration function determines, from a plurality of compute node groups, at least one compute node whose remaining resource meets a preset resource parameter, and an identifier of a compute node group to which the at least one compute node obtained through filtering belongs may form the preselected group identifier list. The preset resource parameter may be agreed on in a protocol, or preconfigured, or preset in the orchestration function.

Optionally, to reduce processing complexity, a part of preselected compute node groups may be further randomly selected from preselected compute node groups indicated by the selected preselected group identifier list, to form a new preselected group identifier list.

Optionally, the orchestration function may perform a deduplication operation on the preselected group identifier list, to reduce processing overheads.

Further, the orchestration function may generate a task resource information prediction request based on a parsing result of the workflow description information. The task resource information prediction request may carry the preselected group identifier list. The computational power assessment function predicts task resource information of a corresponding compute node group based on the preselected group identifier list in the task resource information prediction request. When the task resource information prediction request does not carry the preselected group identifier list, the computational power assessment function may use all compute node groups as the preselected compute node groups, or the computational power assessment function may select the preselected compute node groups through filtering from all the compute node groups. Filtering logic of the computational power assessment function is similar to filtering logic of the orchestration function in the foregoing example. For brevity, details are not described again.

It should be understood that filtering logic or a filtering algorithm of a preselected compute node group (or a preselected group identifier) is not limited in embodiments of this application.

Optionally, the orchestration function may store a correspondence between the type identifier of the task and the task time limit template by using a status collection function.

For example, when predicting the task resource information of the compute node group, the computational power assessment function may first determine a fourth model corresponding to the compute node group and computational power information corresponding to the compute node group, and then use the computational power information of the compute node group and the second task information as an input into the fourth model to predict the task resource information.

Optionally, the status collection function may store a fourth correspondence. In the fourth correspondence, each compute node group in the at least one compute node group has a corresponding fourth model. The computational power assessment function may read the fourth correspondence from the status collection function, to determine, based on the fourth correspondence, a fourth model corresponding to a to-be-predicted compute node group (for example, the foregoing preselected compute node group). Optionally, the status collection function may store a fifth correspondence. In the fifth correspondence, each compute node group in the at least one compute node group has corresponding computational power information. The computational power assessment function may read the fifth correspondence from the status collection function, to determine, based on the fifth correspondence, computational power information corresponding to a to-be-predicted compute node group (for example, the foregoing preselected compute node group).

Optionally, in the fourth correspondence, each compute node group in the at least one compute node group further corresponds to a model description of the fourth model, and the model description indicates a type of input data and a type of output data of the fourth model.

Optionally, the type of the input data includes but is not limited to at least one of the following:
computational power information of a compute node group;
expected duration;
a task parameter; and
information about input data.

Optionally, the type of the output data includes but is not limited to the task resource information.

For example, in S710, the computational power assessment function may traverse each preselected group identifier in the preselected group identifier list, obtain, based on the fourth correspondence and the fifth correspondence, the fourth model corresponding to the preselected group identifier and the computational power information of the compute node group, and then use the computational power information of the compute node group and the second task information as an input into the fourth model to determine task resource information of each compute node group. In this way, a 2-tuple list including the identifier of the compute node group (or the group identifier) and the task resource information is obtained.

For example, in S712, the orchestration function may determine orchestration information by using a preset orchestration algorithm with reference to a 2-tuple list including the group identifier and the task resource information, and compute nodes (for example, the foregoing M compute nodes) in a compute node group corresponding to each group identifier in the 2-tuple list. For example, in an orchestration process, the 2-tuple list including the group identifier and the task resource information may be used to construct a task template. A purpose of the task resource information is not limited in this application.

In some embodiments, the fourth model corresponding to the compute node group may be obtained through pre-training by using the computational power assessment function. With reference to S707 in FIG. 7A and FIG. 7B, for example, the fourth model may be obtained through training based on a first model corresponding to the compute node group, and the first model is used to predict task processing duration of the compute node group. For a manner of obtaining the first model corresponding to the compute node group, refer to the foregoing example. For brevity, details are not described again.

For example, the computational power assessment function may obtain the fourth model through training based on a third training dataset, where a label in the third training dataset may be determined by a first model in the compute node group corresponding to the fourth model. Each piece of third training data in the third training dataset includes a feature and a label, and the label is a measured value of task resource information corresponding to the feature.

For example, the computational power assessment function may construct, based on the first model corresponding to the compute node group, the third training dataset used for training the fourth model corresponding to the compute node group. For example, the computational power assessment function traverses the first correspondence and the second correspondence stored in the status collection function to obtain the computational power information of the compute node group and the first model that correspond to the compute node group, and traverses task templates in a correspondence stored in the status collection function between type identifiers of tasks and task templates, to obtain a task template list corresponding to the compute node group. For each task template in the task template list, the computational power information of the compute node group and the first task information in the task template are used as an input into the first model corresponding to the compute node group, and a measured value of task processing duration output by the first model is obtained, to obtain a 5-tuple list including the computational power information of the compute node group, the resource parameter, the task parameter, the information about the input data, and the measured value of the task processing duration. Each 5-tuple in the 5-tuple list is used to construct third training data. For example, the computational power information, the task parameter, the information about the input data, and the measured value of the task processing duration of the compute node group in the 5-tuple are a feature in the third training data, and the resource parameter in the 5-tuple is a label in the third training data.

Optionally, the computational power assessment function may store a correspondence between an identifier of a compute node and the fourth model in the status collection function.

It should be noted that the example shown in FIG. 7A and FIG. 7B may be combined with any one of the foregoing embodiments. For example, the incremental learning process in the embodiment shown in FIG. 4A, FIG. 4B, and FIG. 4C is applicable to this embodiment, and the training process of the second model in the embodiment shown in FIG. 5A, FIG. 5B, and FIG. 5C is applicable to this embodiment.

For example, the computational power assessment function may update the fourth model when the first model is updated (or incremental learning is performed on the first model). For example, the fourth model is obtained through retraining based on an updated first model, or training data for updating the fourth model is generated based on training data for updating the first model, to perform incremental learning on the fourth model.

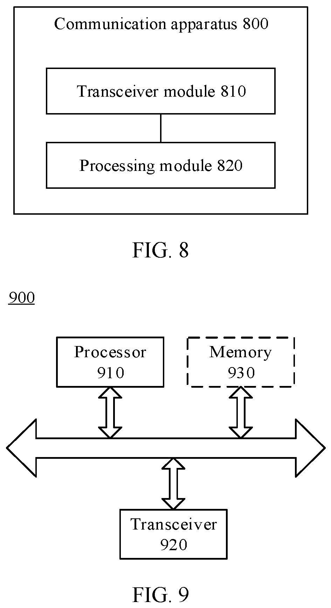

FIG. 8 is a block diagram of a communication apparatus according to an embodiment of this application. The communication apparatus 800 may be the first apparatus in the foregoing method embodiment. The communication apparatus may be a communication device in a RAN or a core network, or may be an apparatus in a communication device, or may be an apparatus that can be used in cooperation with a communication device. As shown in FIG. 8, the apparatus 800 may include a transceiver module 810 and a processing module 820.

When any method embodiment shown in FIG. 3 to FIG. 5A, FIG. 5B, and FIG. 5C is performed, the transceiver module 810 may be configured to receive a task processing duration prediction request, where the prediction request carries first task information. The processing module 820 is configured to predict task processing duration of a compute node group by using a first model based on computational power information of the compute node group and the first task information, where the compute node group includes M compute nodes, M is a positive integer, and the first model is determined based on the compute node group.

When any method embodiment shown in FIG. 6 or FIG. 7A and FIG. 7B is performed, the transceiver module 810 may be configured to receive a task resource information prediction request, where the prediction request carries second task information. The processing module 820 may be configured to predict task resource information of a compute node group by using a fourth model based on computational power information of the compute node group and the second task information, where the compute node group includes M compute nodes, M is a positive integer, and the fourth model is determined based on the compute node group.

It should be understood that specific processes performed by the modules are described in detail in the foregoing method embodiments. For brevity, details are not described herein again.

The transceiver module 810 in the communication apparatus 800 may be implemented by using a transceiver, for example, may correspond to a transceiver 920 in a communication apparatus 900 shown in FIG. 9. The processing module 820 in the communication apparatus 800 may be implemented by using at least one processor, for example, may correspond to a processor 910 in the communication apparatus 900 shown in FIG. 9.

When the communication apparatus 800 is a chip or a chip system configured in a communication device, the transceiver module 810 in the communication apparatus 800 may be implemented by using an input/output interface, a circuit, or the like, and the processing module 820 in the communication apparatus 800 may be implemented by using a processor, a microprocessor, an integrated circuit, or the like integrated on the chip or the chip system.

FIG. 9 is another block diagram of a communication apparatus according to an embodiment of this application. As shown in FIG. 9, the communication apparatus 900 may include a processor 910. The processor 910 may be configured to perform the method performed by the first apparatus in the foregoing method embodiment.

In some possible implementations, the communication apparatus 900 may include a transceiver 920. The transceiver 920 and the processor 910 may communicate with each other through an internal connection path. The processor 910 may control the transceiver 920 to send a signal and/or receive a signal.

In some possible implementations, the communication apparatus 900 may include a memory 930. The memory 930 and the processor 910 may communicate with each other through an internal connection path. The memory 930 and the processor 910 may be integrated together, or may be disposed separately. The memory 930 may alternatively be a memory outside the apparatus. The memory 930 is configured to store instructions. The processor 910 is configured to execute the instructions stored in the memory 930, to implement the methods in the foregoing method embodiments. It should be understood that the communication apparatus 900 may correspond to the first apparatus in the foregoing method embodiments, and may be configured to perform steps and/or procedures performed by the first apparatus in the foregoing method embodiments. Optionally, the memory 930 may include a read-only memory and a random access memory, and provide instructions and data for the processor. A part of the memory may further include a nonvolatile random access memory. The memory 930 may be a separate component, or may be integrated in the processor 910. The processor 910 may be configured to execute the instructions stored in the memory 930, and when the processor 910 executes the instructions stored in the memory, the processor 910 is configured to perform the steps and/or procedures of the method embodiment that correspond to the first apparatus.

The transceiver 920 may include a transmitter and a receiver. The transceiver 920 may further include an antenna. There may be one or more antennas. The processor 910, the memory 930, and the transceiver 920 may be components integrated into different chips. For example, the processor 910 and the memory 930 may be integrated into a baseband chip, and the transceiver 920 may be integrated into a radio frequency chip. Alternatively, the processor 910, the memory 930, and the transceiver 920 may be components integrated into a same chip. This is not limited in this application.

Alternatively, the transceiver 920 may be a communication interface, for example, an input/output interface or a circuit. The transceiver 920, the processor 910, and the memory 930 may be integrated into a same chip, for example, integrated into a baseband chip.

This application further provides a communication apparatus, including at least one processor. The at least one processor runs a computer program or a logic circuit, so that the processing apparatus performs the method performed by the first apparatus in the foregoing method embodiments. The communication apparatus may further include a memory, and the memory is configured to store the computer program.

An embodiment of this application further provides a communication apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the first apparatus in the foregoing method embodiments.

An embodiment of this application further provides a communication apparatus, including a processor and a memory. The memory is configured to store a computer program, and the processor is configured to invoke the computer program from the memory and run the computer program, so that the processing apparatus performs the method performed by the first apparatus in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro-controller unit, MCU), a programmable controller (programmable logic device, PLD), or another integrated chip.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes a computer program or a group of instructions. When the computer program or the group of instructions are run on a computer, the computer is enabled to perform the method performed by the first apparatus in the foregoing method embodiments.

According to the method provided in embodiments of this application, this application further provides a computer-readable storage medium. The computer-readable storage medium stores a program. When the program is run on a computer, the computer is enabled to perform the method performed by the first apparatus in the foregoing method embodiments.

According to the method provided in embodiments of this application, this application further provides a communication system. The communication system may include the foregoing first apparatus. Optionally, the communication system may further include the foregoing second apparatus and computer node and the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for predicting task processing duration, comprising:
receiving a task processing duration prediction request, wherein the prediction request carries task information; and
predicting task processing duration of a compute node group by using a first model based on computational power information of the compute node group and the task information, wherein the compute node group comprises M compute nodes, M is a positive integer, and the first model is determined based on the compute node group.

2. The method according to claim 1, wherein the task information comprises a resource parameter, and the resource parameter indicates a resource type and a quantity of resources for performing task processing.

3. The method according to claim 1 or 2, wherein the task information comprises a task parameter, the task parameter indicates a parameter used for task processing, and the task parameter is associated with the task processing duration.

4. The method according to claim 3, wherein the task information comprises information about input data, and the information about the input data indicates a size of the input data required for task processing.

5. The method according to any one of claims 1 to 4, wherein at least one computational power parameter is the same for the M compute nodes.

6. The method according to any one of claims 1 to 5, wherein the first model is determined based on a second model in at least one first compute node, the second model is used to predict task processing duration of a corresponding first compute node, and the M compute nodes comprise the at least one first compute node.

7. The method according to claim 6, further comprising:
sending a first request, wherein the first request is used to request transmission of information about the second model; and
receiving a first response, wherein the first response comprises information about the second model.

8. The method according to claim 6 or 7, further comprising:
receiving first information from each of N compute nodes, wherein the first information comprises information indicating whether the compute node comprises the second model, and the N compute nodes comprise the M compute nodes; and
determining the at least one first compute node in the M compute nodes based on the N pieces of first information.

9. The method according to any one of claims 6 to 8, further comprising:
receiving computational power information from each compute node in N compute nodes, wherein the computational power information comprises at least one computational power parameter of a corresponding compute node; and
determining the compute node group and the computational power information of the compute node group based on the computational power information of each of the N compute nodes.

10. The method according to any one of claims 6 to 9, further comprising:
sending a second request, wherein the second request carries first indication information for training the second model; and
receiving a second response, wherein
when the first indication information indicates that the second model is obtained through training, the second response comprises the information about the second model; or
when the first indication information indicates to obtain a first training dataset, the second response comprises a first training dataset used for training to obtain the second model, each piece of first training data in the first training dataset comprises a feature and a label, and the label is a measured value of task processing duration corresponding to the feature.

11. The method according to any one of claims 1 to 10, further comprising:
sending a first prediction response, wherein the first prediction response carries information about the task processing duration corresponding to the compute node group.

12. The method according to claim 11, wherein the first prediction response comprises an identifier of the compute node group and the information about the task processing duration.

13. The method according to any one of claims 1 to 12, further comprising:
sending third indication information;
when the third indication information indicates to update the second model, receiving information, sent by the first compute node, about an updated second model; and updating the first model based on the information about the updated second model; or
when the third indication information indicates not to update the second model, receiving a measured value, sent by the first compute node, of task processing duration corresponding to the task information; and
training the first model based on the measured value of the task processing duration corresponding to the task information to obtain an updated first model, wherein
the first compute node belongs to the M compute nodes.

14. The method according to claim 13, wherein the first request carries the third indication information, and the first request is used to request transmission of the information about the second model.

15. A communication apparatus, comprising:
a transceiver module, configured to receive a task processing duration prediction request, wherein the prediction request carries task information; and
a processing module, configured to predict task processing duration of a compute node group by using a first model based on computational power information of the compute node group and the task information, wherein the compute node group comprises M compute nodes, M is a positive integer, and the first model is determined based on the compute node group.

16. The apparatus according to claim 15, wherein the task information comprises a resource parameter, and the resource parameter indicates a resource type and a quantity of resources for performing task processing.

17. The apparatus according to claim 15 or 16, wherein the task information comprises a task parameter, the task parameter indicates a parameter used for task processing, and the task parameter is associated with the task processing duration.

18. The apparatus according to claim 17, wherein the task information comprises information about input data, and the information about the input data indicates a size of the input data required for task processing.

19. The apparatus according to any one of claims 15 to 18, wherein at least one computational power parameter is the same for the M compute nodes.

20. The apparatus according to any one of claims 15 to 19, wherein the first model is determined based on a second model in at least one first compute node, the second model is used to predict task processing duration of a corresponding first compute node, and the M compute nodes comprise the at least one first compute node.

21. The apparatus according to claim 20, wherein the transceiver module is further configured to:
send a first request, wherein the first request is used to request transmission of information about the second model; and
receive a first response, wherein the first response comprises information about the second model.

22. The apparatus according to claim 20 or 21, wherein
the transceiver module is further configured to receive first information from each of N compute nodes, wherein the first information comprises information indicating whether the compute node comprises the second model, and the N compute nodes comprise the M compute nodes; and
the processing module is further configured to determine the at least one first compute node in the M compute nodes based on the N pieces of first information.

23. The apparatus according to any one of claims 20 to 22, wherein
the transceiver module is further configured to receive computational power information from each compute node in N compute nodes, wherein the computational power information comprises at least one computational power parameter of a corresponding compute node; and
the processing module is further configured to determine the compute node group and the computational power information of the compute node group based on the computational power information of each of the N compute nodes.

24. The apparatus according to any one of claims 20 to 23, wherein the transceiver module is further configured to:
send a second request, wherein the second request carries first indication information for training the second model; and
receive a second response, wherein
when the first indication information indicates that the second model is obtained through training, the second response comprises the information about the second model; or
when the first indication information indicates to obtain a first training dataset, the second response comprises a first training dataset used for training to obtain the second model, each piece of first training data in the first training dataset comprises a feature and a label, and the label is a measured value of task processing duration corresponding to the feature.

25. The apparatus according to any one of claims 15 to 24, wherein the transceiver module is further configured to:
send a first prediction response, wherein the first prediction response carries information about the task processing duration corresponding to the compute node group.

26. The apparatus according to claim 25, wherein the first prediction response comprises an identifier of the compute node group and the information about the task processing duration.

27. The apparatus according to any one of claims 15 to 26, wherein the transceiver module is further configured to:
send third indication information;
when the third indication information indicates to update the second model, receiving information, sent by the first compute node, about an updated second model; and updating the first model based on the information about the updated second model; or
when the third indication information indicates not to update the second model, receiving a measured value, sent by the first compute node, of task processing duration corresponding to the task information; and
training the first model based on the measured value of the task processing duration corresponding to the task information to obtain an updated first model, wherein
the first compute node belongs to the M compute nodes.

28. The apparatus according to claim 27, wherein the first request carries the third indication information, and the first request is used to request transmission of the information about the second model.

29. The apparatus according to any one of claims 15 to 28, wherein the processing module is deployed in a central unit CU or a distributed unit DU.

30. A communication apparatus, comprising a processor, wherein the processor is configured to perform the method according to any one of claims 1 to 14 by running a computer program or using a logic circuit.

31. The apparatus according to claim 30, further comprising a memory, wherein the memory is configured to store the computer program.

32. The apparatus according to claim 30 or 31, further comprising a communication interface, wherein the communication interface is configured to input and/or output a signal.

33. A computer-readable storage medium, configured to store computer program instructions, wherein the computer program enables a computer to perform the method according to any one of claims 1 to 14.

34. A computer program product, comprising computer program instructions, wherein the computer program instructions enable a computer to perform the method according to any one of claims 1 to 14.
